# EUROPEAN PATENT APPLICATION

(11) **EP 4 287 737 A1**
(43) Date of publication of application: **06.12.2023**
(21) Application number: 22745780.1
(22) Date of filing: 24.01.2022
(51) Int. Cl.: H04W 72/04

(54) **TERMINAL, WIRELESS COMMUNICATION METHOD, AND BASE STATION**

(30) Priority: 29.01.2021 JP 2021013244
(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/002337
(87) International publication number: WO 2022/163559

(57) **Abstract**

A terminal according to an aspect of the present disclosure includes a receiving section that receives a configuration for two physical downlink control channel (PDCCH) candidates linked to each other, and a control section that, when the terminal is not required to monitor one of the two PDCCH candidates, determines whether or not monitoring of at least one of the two PDCCH candidates is required. According to an aspect of the present disclosure, PDCCH candidates can be appropriately monitored.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Repetition of a physical downlink control channel (PDCCH) has been under study.

However, how to monitor PDCCH candidates for a plurality of repetitions has not been made clear. Unless the PDCCH candidates are appropriately determined, throughput may be reduced or communication quality may be deteriorated.

In view of this, the present disclosure has one object to provide a terminal, a radio communication method, and a base station for appropriately monitoring PDCCH candidates.

### Solution to Problem

A terminal according to an aspect of the present disclosure includes a receiving section that receives a configuration for two physical downlink control channel (PDCCH) candidates linked to each other, and a control section that, when the terminal is not required to monitor one of the two PDCCH candidates, determines whether or not monitoring of at least one of the two PDCCH candidates is required.

### Advantageous Effects of Invention

According to an aspect of the present disclosure, PDCCH candidates can be appropriately monitored.

### Brief Description of Drawings

FIGS. 1A and 1B are each a diagram to show an example of a maximum number of monitored PDCCH candidates;
FIGS. 2A and 2B are each a diagram to show an example of a maximum number of non-overlapped CCEs;
FIG. 3 is a diagram to show an example of case 5;
FIG. 4 is a diagram to show an example of a first embodiment;
FIG. 5 is a diagram to show an example of aspect 2-1;
FIG. 6 is a diagram to show an example of aspect 2-2;
FIGS. 7A and 7B are each a diagram to show an example of aspect 2-3;
FIGS. 8A and 8B are each a diagram to show an example of aspect 2-4;
FIGS. 9A and 9B are each a diagram to show an example of aspect 3-1;
FIGS. 10A and 10B are each a diagram to show an example of aspect 3-2;
FIGS. 11A and 11B are each a diagram to show an example of a fourth embodiment;
FIG. 12 is a diagram to show an example of aspect 5-1;
FIG. 13 is a diagram to show an example of aspect 5-2;
FIG. 14 is a diagram to show an example of a prioritized CORESET and other CORESETs to be simultaneously monitored according to Embodiment 1.1.1;
FIG. 15 is diagram to show an example of the prioritized CORESET according to Embodiment 1.1.2.1;
FIG. 16 is a diagram to show an example of the prioritized CORESET according to Embodiment 1.1.2.1;
FIG. 17 is a diagram to show an example of the prioritized CORESET according to Embodiment 1.1.2.1;
FIG. 18 is a diagram to show an example of the prioritized CORESET according to Embodiment 1.1.2.2;
FIG. 19 is a diagram to show an example of the prioritized CORESET and other CORESETs to be simultaneously monitored according to Embodiment 1.1.2;
FIG. 20 is a diagram to show an example of the prioritized CORESET and other CORESETs to be simultaneously monitored according to Embodiment 1.1.2;
FIG. 21 is a diagram to show an example of the prioritized CORESET and other CORESETs to be simultaneously monitored according to Embodiment 1.2;
FIG. 22 is a diagram to show an example of the prioritized CORESET and other CORESETs to be simultaneously monitored according to Embodiment 2.1.1;
FIG. 23 is a diagram to show an example of the prioritized CORESET according to Embodiment 2.1.2.1;
FIG. 24 is a diagram to show an example of the prioritized CORESET according to Embodiment 2.1.2.2;
FIG. 25 is a diagram to show an example of the prioritized CORESET and other CORESETs to be simultaneously monitored according to Embodiment 2.1.2;
FIG. 26 is a diagram to show an example of the prioritized CORESET and other CORESETs to be simultaneously monitored according to Embodiment 2.2;
FIG. 27 is a diagram to show an example of a schematic structure of a radio communication system according to one embodiment;
FIG. 28 is a diagram to show an example of a structure of a base station according to one embodiment;
FIG. 29 is a diagram to show an example of a structure of a user terminal according to one embodiment; and
FIG. 30 is a diagram to show an example of a hardware structure of the base station and the user terminal according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) in a UE regarding at least one of a signal and a channel (which may be referred to as a signal/channel) based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a given signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (indicated) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

The RS for QCL type X for the TCI state may mean the RS in the QCL type X relation with (the DMRS for) a given channel/signal, and the RS may be referred to as a QCL source of the QCL type X for the TCI state.

### (Multi TRP)

For NR, a scheme in which one or a plurality of transmission/reception points (TRPs) (multi TRP (MTRP)) perform DL transmission to the UE by using one or a plurality of panels (multi panel) has been under study. A scheme in which the UE performs UL transmission to one or a plurality of TRPs by using one or a plurality of panels has been under study.

Note that the plurality of TRPs may correspond to the same cell identifier (ID), or may correspond to different cell IDs. The cell ID may be a physical cell ID, or may be a virtual cell ID.

The multi TRP (for example, TRPs #1 and #2) are connected with an ideal/non-ideal backhaul, and information, data, and the like may be exchanged therebetween. Different code words (CWs) and different layers may be transmitted from each TRP of the multi TRP. As one mode of multi TRP transmission, non-coherent joint transmission (NCJT) may be used.

In NCJT, for example, TRP #1 performs modulation mapping of a first code word and performs layer mapping so as to transmit a first PDSCH by using first precoding for a first number of layers (for example, two layers). TRP #2 performs modulation mapping of a second code word and performs layer mapping so as to transmit a second PDSCH by using second precoding for a second number of layers (for example, two layers).

Note that it may be defined that a plurality of PDSCHs (multi PDSCH) subjected to NCJT partially or entirely overlap in at least one of time and frequency domains. In other words, at least one of the time and frequency resources of the first PDSCH from the first TRP and the second PDSCH from the second TRP may overlap.

It may be assumed that these first PDSCH and second PDSCH are not in a relationship of quasi-co-location (QCL) (not quasi-co-located). Reception of the multi PDSCH may be interpreted as simultaneous reception of PDSCHs that are not of a given QCL type (for example, QCL type D).

The plurality of PDSCHs (which may be referred to as multi PDSCH (multiple PDSCH)) from the multi TRP may be scheduled using one DCI (single DCI, single PDCCH) (single master mode, single-DCI based multi-TRP). The plurality of PDSCHs from the multi TRP may be scheduled respectively using a plurality of DCIs (multi DCI, multi PDCCH (multiple PDCCH)) (multi master mode, multi-DCI based multi-TRP).

In URLLC for the multi-TRPs, support of PDSCH (transport block (TB) or codeword (CW)) repetition across the multi-TRPs has been under study. Support of repetition schemes (URLLC scheme, for example, schemes 1, 2a, 2b, 3, and 4) across the multi-TRPs in the frequency domain, the layer (space) domain, or the time domain has been under study. In scheme 1, the multi-PDSCHs from the multi-TRPs are subjected to space division multiplexing (SDM). In schemes 2a and 2b, the PDSCH from the multi-TRPs is subjected to frequency division multiplexing (FDM). In scheme 2a, the redundancy version (RV) is the same for the multi-TRPs. In scheme 2b, the RV may be the same or may be different for the multi-TRPs. In schemes 3 and 4, the multi-PDSCHs from the multi-TRPs are subjected to time division multiplexing (TDM). In scheme 3, the multi-PDSCHs from the multi-TRPs are transmitted in one slot. In scheme 4, the multi-PDSCHs from the multi-TRPs are transmitted in different slots.

According to the multi TRP scenario as described above, more flexible transmission control using a channel having satisfactory quality can be performed.

In order to support multi TRP transmission within a cell ("intra-cell", having the same cell ID) and among cells ("inter-cell", having different cell IDs) based on a plurality of PDCCHs, in RRC configuration information for linking a plurality of pairs of PDCCHs and PDSCHs having a plurality of TRPs, one control resource set (CORESET) in PDCCH configuration information (PDCCH-Config) may correspond to one TRP.

When at least one of the following conditions 1 and 2 is satisfied, the UE may determine the multi-DCI based multi-TRP. In this case, the TRP may be interpreted as a CORESET pool index.

### [Condition 1]

One CORESET pool index is configured.

### [Condition 2]

Two different values (for example, 0 and 1) of the CORESET pool index are configured.

When the following condition is satisfied, the UE may determine the single-DCI based multi-TRP. In this case, two TRPs may be interpreted as two TCI states indicated by a MAC CE/DCI.

### [Condition]

In order to indicate one or two TCI states for one code point of a TCI field in the DCI, "Enhanced TCI States Activation/Deactivation for UE-specific PDSCH MAC CE" is used.

The DCI for common beam indication may be a UE-specific DCI format (for example, a DL DCI format (for example, 1_1, 1_2), a UL DCI format (for example, 0_1, 0_2)), or may be a UE-group common DCI format.

### (Multi TRP PDCCH)

In Rel. 17 or later versions, it may be assumed that repetition transmission (PDCCH repetition) is applied to the PDCCH (or the DCI) transmitted from one or more TRPs. For example, it is considered that scheduling or transmission and reception indication of one or more signals/channels is performed using a plurality of PDCCHs (or DCIs) transmitted from one or more TRPs.

The PDCCHs/DCIs to which the repetition transmission is applied may be referred to as multi PDCCH/multi DCI. The repetition transmission of the PDCCH may be interchangeably interpreted as PDCCH repetition, a plurality of PDCCH transmissions, multi PDCCH transmission or multiple PDCCH transmission, an MTR PDCCH, or the like.

The multi PDCCH/multi DCI may be transmitted respectively from different TRPs. The multi PDCCH/DCI may be multiplexed using time division multiplexing (TDM)/frequency division multiplexing (FDM)/space division multiplexing (SDM).

For example, when PDCCH repetition using TDM (TDM PDCCH repetition) is performed, the PDCCH may be transmitted using different time resources from a plurality of TRPs.

When FDM PDCCH repetition is performed, the PDCCH may be transmitted using different frequency time resources from a plurality of TRPs. In FDM PDCCH repetition, at least one of two sets of resource element groups (REGs), a control channel element (CCE) of the PDCCH to be transmitted, two PDCCH repetitions to be transmitted that do not overlap with respect to frequencies, and multi-chance PDCCHs to be transmitted that do not overlap with respect to frequencies may relate to different TCI states.

When SDM PDCCH repetition is performed, the PDCCH may be transmitted using the same time/frequency resources from a plurality of TRPs. In SDM PDCCH repetition, PDCCH DMRSs in all of the REGs/CCEs of the PDCCH may relate to two TCI states. Note that, in the present disclosure, SDM may be interchangeably interpreted as a single frequency network (SFN).

### (Collision of Plurality of Channels/Signals)

In specifications of Rel. 15/16 NR thus far, the UE can receive, detect, or monitor only channels/signals of the same QCL type D in the same time, but cannot receive, detect, or monitor a plurality of channels/signals of different QCL types D in the same time. Thus, when a plurality of channels/signals collide (i.e., are transmitted/received in overlapping time), in order to ensure that the plurality of channels/signals correspond to the same QCL type D or to avoid such a case, restrictions (which may be referred to as priority rules, QCL application rules, or the like) as described later are defined in the specifications of Rel. 15/16 NR.

Note that, in the present disclosure, a case in which a plurality of channels/signals collide may mean a case in which reception (or transmission) of a plurality of channels/signals of different QCL types D in the same time resources (time period) is scheduled (or configured).

In the present disclosure, a case in which (a reference RS of) QCL type D of a given channel/signal and (a reference RS of) QCL type D of another channel/signal are different may mean that a beam used for communication of the given channel/signal and a beam used for communication of the another channel/signal are different. In the present disclosure, a case in which (a reference RS of) QCL type D of a given channel/signal and (a reference RS of) QCL type D of another channel/signal are different may be described as a case in which QCL types D of the given channel/signal and the another channel/signal are different, these QCL type D properties are different, "QCL types D" are different, or the like.

### <PDCCH vs. PDCCH>

When the UE is configured with single cell operation or is configured with operation of carrier aggregation in the same frequency band, and monitors PDCCH candidates in overlapping monitoring occasions in a plurality of CORESETs having the same or different QCL type D property in an active DL BWP of one or more cells, the UE monitors the PDCCH in, among the plurality of CORESETs, only a given CORESET and a CORESET having the same QCL type D property as the CORESET.

The "given CORESET" corresponds to, if any, a CSS set having the minimum index in a cell having the minimum index including a common search space (CSS) set, otherwise, the "given CORESET" corresponds to a UE-specific search space (USS) set having the minimum index in the cell having the minimum index. The minimum USS set index is determined over all of the USS sets having at least one PDCCH candidate in the overlapping PDCCH monitoring occasions.

In brief, when the UE monitors the PDCCH candidates in overlapping monitoring occasions, the UE determines the CORESET to be monitored in accordance with a priority rule that the CSS set is preferentially monitored over the USS set, and that, among the SS sets of the same type (CSS or USS), the SS set having the smaller index (in other words, the SS set having the smaller cell index; the SS set having the smaller SS set index when the SS sets have the same cell index) is preferentially monitored.

Note that the SS set index may correspond to a value configured with an RRC parameter SearchSpaceId for identifying a search space. Note that, in the present disclosure, the CSS set index may mean the SS set index regarding the SS set whose search space type (RRC parameter "searchSpaceType") indicates the CSS. In the present disclosure, the USS set index may mean the SS set index regarding the SS set whose search space type (RRC parameter "searchSpaceType") indicates the USS.

### (Multi TRP PDCCH based on Non-SFN)

For reliability of multi TRP PDCCH based on a non-single frequency network (non-SFN), the following has been under study.
- Coding/rate matching is based on one repetition, and the same coding bit is repeated in other repetitions.
- Each repetition has the same number of control channel elements (CCEs) and the same coding bit, and corresponds to the same DCI payload.
- Two or more PDCCH candidates are explicitly linked to each other. The UE is informed of the link before decoding.

The following choices 1-2, 1-3, 2, and 3 for PDCCH repetition have been under study.

### [Choice 1-2]

Two sets of PDCCH candidates (in a given search space (SS) set) are respectively associated with two TCI states of the CORESET. Here, the PDCCH repetition in the same CORESET, the same SS set, and different monitoring occasions is used.

### [Choice 1-3]

Two sets of PDCCH candidates are respectively associated with two SS sets. Both of the SS sets are associated with the CORESET, and each SS set is associated with only one TCI state of the CORESET. Here, the same CORESET and two SS sets are used.

### [Choice 2]

One SS set is associated with two different CORESETs.

### [Choice 3]

Two SS sets are respectively associated with two CORESETs.

In this manner, a scheme has been under study in which two PDCCH candidates in two SS sets for the PDCCH repetition are supported, and the two SS sets are explicitly linked (linkage therebetween is configured/indicated/defined) .

### (Determination of PDCCH Candidate Allocation)

In Rel-15 NR, for the common search space (CSS), a network (NW) ensures no occurrence of overbooking (excessive allocation). The UE does not assume configuration of the CCS set that causes a corresponding total number or the number per scheduled cell regarding the PDCCH candidates and non-overlapped control channel elements (CCEs) monitored per slot to exceed a corresponding maximum number per slot.

In Rel-15 NR, for a secondary cell (SCell), the network (NW) ensures no occurrence of overbooking based on a case without carrier aggregation (CA) (non-CA). For cross carrier scheduling when a scheduling cell and a scheduled cell have a plurality of DL BWPs having the same subcarrier spacing (SCS) configuration µ or scheduling of the same cell, the UE does not assume that the number of PDCCH candidates and the number of non-overlapped CCEs per slot in the SCell exceeds a corresponding number that the UE can monitor in the SCell per slot.

The UE does not assume monitoring of the PDCCH in the USS set not having the PDCCH allocated for monitoring.

First, the PDCCH candidates for the CSS are allocated, and subsequently the PDCCH candidates for the UE-specific search space (USS) are allocated in ascending order of a search space set index (ID) (in order from the lowest search space set ID).

The CSS has a priority higher than that of the USS.

Prior to the PDCCH candidates of the USS set having a higher SS set ID, all of the PDCCH candidates of the USS set having a lower SS set ID are mapped. If all of the PDCCH candidates in a given SS set (USS) cannot be mapped (there is not sufficient room for the PDCCH candidates (a remaining number of PDCCH candidates up to the maximum number) for the SS set), the PDCCH candidates in the SS set and its subsequent SS sets are dropped (not mapped). In the SS set ID order, an SS set subsequent to a given SS set may be referred to as a subsequent SS set.

If a higher layer index is configured for each CORESET for the UE supporting the multi-PDCCH (multi-DCI) based multi TRP transmission, the UE may support the following principle for the maximum number of BDs and CCEs for the multi-DCI based multi TRP transmission.

For the CORESET configured for the same TRP (same higher layer index), the maximum number of monitored PDCCH candidates per slot in a given DL BWP may not exceed a limit M_{PDCCH}^{max,slot,µ} of Rel. 15, and the maximum number of non-overlapped CCEs may not exceed a limit C_{PDCCH}^{max,slot,µ} of Rel. 15. The higher layer index may be configured for each piece of PDCCH configuration information (PDCCH-Config) and for each CORESET. The higher layer index may correspond to the TRP.

The UE may show a capability of monitoring the PDCCH in accordance with one or more combinations (X, Y). One span may be consecutive symbols in which the UE is configured to monitor the PDCCH in one slot. Each PDCCH monitoring occasion may be present within one span. If the UE monitors the PDCCH in one cell according to the combination(s) (X, Y), the UE supports a plurality of PDCCH monitoring occasions in any symbol of one slot having a minimum time interval (separation) of X symbols between first symbols of two consecutive spans including crossing over a plurality of slots. One span starts in the first symbol in which a given PDCCH monitoring occasion starts and ends in the last symbol in which the given PDCCH monitoring occasion ends. The number of symbols of the span is up to Y.

A maximum number M_{PDCCH}^{max, (X,Y),µ} of PDCCH candidates monitored in one span for the combination(s) (X, Y) in the DL BWP having a subcarrier spacing (SCS) configuration µ ∈ {0, 1} for the single serving cell may be defined in a specification. A maximum number C_{PDCCH}^{max, (X,Y),µ} of non-overlapped CCEs in one span for the combination(s) (X, Y) in the DL BWP having a subcarrier spacing (SCS) configuration u{0, 1} for the single serving cell may be defined in a specification.

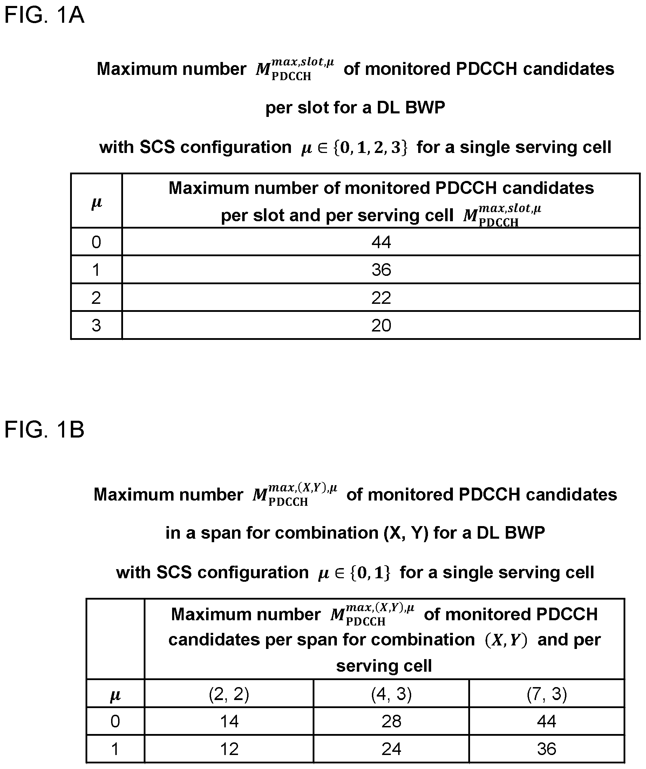

FIG. 1A illustrates the maximum number M_{PDCCH}^{max,slot,µ} of monitored PDCCH candidates per slot for the DL BWP having an SCS configuration µ ∈ {0, 1, 2, 3} for operation using the single serving cell. FIG. 1B illustrates the maximum number M_{PDCCH}^{max, (X,Y),µ} of monitored PDCCH candidates in one span for the combination(s) (X, Y) in the DL BWP having a subcarrier spacing (SCS) configuration µ ∈ {0, 1} for the single serving cell.

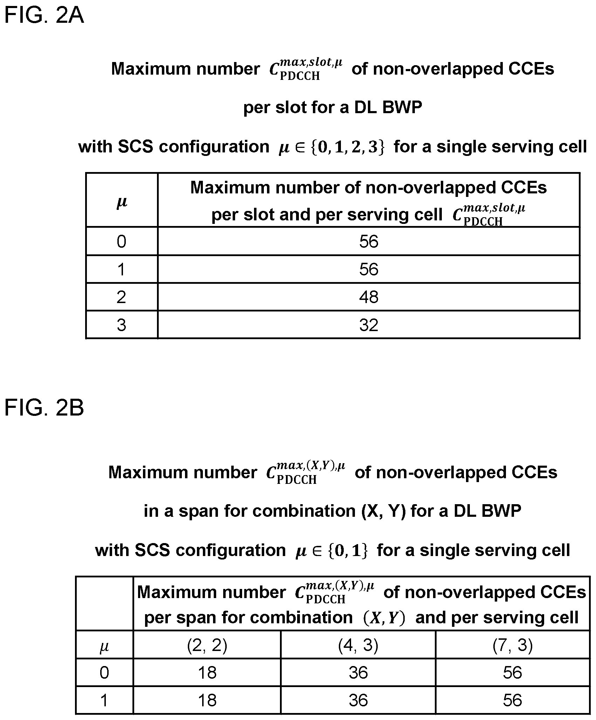

FIG. 2A illustrates the maximum number C_{PDCCH}^{max,slot,µ} of non-overlapped CCEs per slot for the DL BWP having an SCS configuration µ ∈ {0, 1, 2, 3} for operation using the single serving cell. FIG. 2B illustrates the maximum number M_{PDCCH}^{max, (X, Y),µ} of non-overlapped CCEs in one span for the combination (s) (X, Y) in the DL BWP having a subcarrier spacing (SCS) configuration µ ∈ {0, 1} for the single serving cell.

When the CCEs for the PDCCH candidates correspond to different CORESET indexes or different first symbols for reception of the respective PDCCH candidates, the CCEs do not overlap.

If Σ_{µ=0}³N_{cells}^{DL,µ} ≤ N_{cells}^{cap} and the UE is configured with N_{cells}^{DL,µ} DL cells having the DL BWP having the SCS configuration µ, the UE is not required to monitor more than M_{PDCCH}^{total,slot,µ} = M_{PDCCH}^{max,slot,µ} PDCCH candidates or more than C_{PDCCH}^{total,slot,µ} = C_{PDCCH}^{max,slot,µ} non-overlapped CCEs per slot for each scheduled cell in the active DL BWP of the scheduling cell. N_{cells}^{cap} may be a value of capability information (pdcch-BlindDetectionCA) provided by the UE, or may be the number of configured DL cells.

Two PDCCH candidates (repetitions) having linkage (linkage, combination, coordination) may be decoded by the UE using soft-combining. Regarding how to count up to the limit of the BDs/CCEs, the following assumptions have been under study.

### [Assumption 0]

In the BD limit, regarding complexity relating to RE demapping/demodulation, two units are required.

### [Assumption 0-1]

In the BD limit, regarding complexity relating to decoding, one or more units are required. The UE only decodes combined candidates without decoding individual PDCCH candidates. The expression "or more" is provided because soft-combining has additional complexity relating to storage. In this case, blockage may affect performance (not separated decoding). In this case, it is implied that a base station (gNB) needs to constantly transmit both of the PDCCH candidates (in other words, the base station cannot select only one of them).

### [Assumption 0-2]

In the BD limit, regarding complexity relating to decoding, two units are required. The UE decodes individual PDCCH candidates. For the BD, soft-combining is not taken into consideration.

### [Assumption 0-3]

In the BD limit, regarding complexity relating to decoding, two or more units are required. The UE decodes the first PDCCH candidate and also decodes combined candidates. In this case, if the first PDCCH candidate is blocked (due to PDCCH blocking or due to blockage), (in addition to first decoding) second decoding is affected. In this case, it is implied that the base station (gNB) cannot select transmission of only the DCI in the second PDCCH candidate.

### [Assumption 0-4]

In the BD limit, regarding complexity relating to decoding, three units are required. The UE individually decodes each PDCCH candidate and also decodes combined candidates.

### (Analysis)

In existing specifications, there are some cases (rules) in which the UE is not required to monitor the PDCCH candidates.

When the UE is not required to monitor one of two linked PDCCH candidates based on the rules in the PDCCH repetition having two PDCCH candidates linked to each other, whether the UE is required to monitor any of the two linked PDCCH candidates is unclear.

In view of this, the inventors of the present invention came up with the idea of a method of monitoring for two PDCCH candidates linked to each other.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted as each other. In the present disclosure, a cell, a serving cell, a CC, a carrier, a BWP, a DL BWP, a UL BWP, an active DL BWP, an active UL BWP, and a band may be interchangeably interpreted as each other. In the present disclosure, an index, an ID, an indicator, and a resource ID may be interchangeably interpreted as each other. In the present disclosure, a sequence, a list, a set, a group, a cluster, a subset, and the like may be interchangeably interpreted as each other. In the present disclosure, to support, to control, to be able to control, to operate, and to be able to operate may be interchangeably interpreted as each other.

In the present disclosure, configure, activate, update, indicate, enable, specify, and select may be interchangeably interpreted as each other.

In the present disclosure, link, associate, correspond, map, repeat, and relate may be interchangeably interpreted as each other. In the present disclosure, allocate, assign, monitor, and map may be interchangeably interpreted as each other.

In the present disclosure, the higher layer signaling may be, for example, any one of Radio Resource Control (RRC) signaling, Medium Access Control (MAC) signaling, broadcast information, and the like, or a combination of these. In the present disclosure, RRC, RRC signaling, an RRC parameter, a higher layer, a higher layer parameter, an RRC information element (IE), an RRC message, and a configuration may be interchangeably interpreted as each other.

The MAC signaling may use, for example, a MAC control element (MAC CE), a MAC Protocol Data Unit (PDU), or the like. In the present disclosure, a MAC CE, an update command, and an activation/deactivation command may be interchangeably interpreted as each other.

The broadcast information may be, for example, a master information block (MIB), a system information block (SIB), minimum system information (Remaining Minimum System Information (RMSI), SIB1), other system information (OSI), or the like.

In the present disclosure, a beam, a spatial domain filter, a space setting, a TCI state, a UL TCI state, a unified TCI state, a unified beam, a common TCI state, a common beam, a TCI assumption, a QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D of a TCI state/QCL assumption, an RS of QCL type A of a TCI state/QCL assumption, spatial relation, a spatial domain transmission filter, a UE spatial domain transmission filter, a UE transmit beam, a UL beam, a UL transmit beam, UL precoding, a UL precoder, and a PL-RS may be interchangeably interpreted as each other. In the present disclosure, a QCL type X-RS, a DL-RS associated with QCL type X, a DL-RS having QCL type X, a source of a DL-RS, an SSB, a CSI-RS, and an SRS may be interchangeably interpreted as each other.

In the present disclosure, a panel, an Uplink (UL) transmission entity, a TRP, a spatial relation, a control resource set (CORESET), a PDSCH, a code word, a base station, an antenna port of a given signal (for example, a demodulation reference signal (DMRS) port), an antenna port group of a given signal (for example, a DMRS port group), a group for multiplexing (for example, a code division multiplexing (CDM) group, a reference signal group, a CORESET group), a CORESET pool, a CORESET subset, a CW, a redundancy version (RV), and a layer (a MIMO layer, a transmission layer, a spatial layer) may be interchangeably interpreted as each other. A panel Identifier (ID) and a panel may be interchangeably interpreted as each other. In the present disclosure, a TRP ID and a TRP may be interchangeably interpreted as each other.

The panel may relate to at least one of a group index of an SSB/CSI-RS group, a group index of a group based beam report, and a group index of an SSB/CSI-RS group for a group based beam report.

The panel Identifier (ID) and the panel may be interchangeably interpreted as each other. In other words, a TRP ID and a TRP, a CORESET group ID and a CORESET group, and the like may be interchangeably interpreted as each other.

In the present disclosure, a TRP, a transmission point, a panel, a DMRS port group, a CORESET pool, and one of two TCI states associated with one code point of a TCI field may be interchangeably interpreted as each other.

In the present disclosure, it may be assumed that the single PDCCH is supported when the multi TRPs use the ideal backhaul. It may be assumed that the multi PDCCH is supported when the multi TRPs use the non-ideal backhaul.

Note that the ideal backhaul may be referred to as DMRS port group type 1, reference signal related group type 1, antenna port group type 1, CORESET pool type 1, or the like. The non-ideal backhaul may be referred to as DMRS port group type 2, reference signal related group type 2, antenna port group type 2, CORESET pool type 2, or the like. Terms are not limited to these.

In the present disclosure, a single TRP, a single TRP system, a single TRP transmission, and a single PDSCH may be interchangeably interpreted as each other. In the present disclosure, a multi TRP, a multi TRP system, multi TRP transmission, and a multi PDSCH may be interchangeably interpreted as each other. In the present disclosure, a single DCI, a single PDCCH, a single-DCI based multi-TRP, and activation of two TCI states in at least one TCI code point may be interchangeably interpreted as each other.

In the present disclosure, a single TRP, a channel using a single TRP, a channel using one TCI state/spatial relation, no enabling of a multi TRP by RRC/DCI, no enabling of a plurality of TCI states/spatial relations by RRC/DCI, and no configuration of one CORESET pool index (CORESETPoolIndex) value for any of the CORESETs and no mapping of any code point of a TCI field to two TCI states may be interchangeably interpreted as each other.

In the present disclosure, a multi TRP, a channel using a multi TRP, a channel using a plurality of TCI states/spatial relations, enabling of a multi TRP by RRC/DCI, enabling of a plurality of TCI states/spatial relations by RRC/DCI, and at least one of a single-DCI based multi-TRP and a multi-DCI based multi-TRP may be interchangeably interpreted as each other. In the present disclosure, a multi-DCI based multi-TRP and configuration of one CORESET pool index (CORESETPoolIndex) value for the CORESET may be interchangeably interpreted as each other. In the present disclosure, a single-DCI based multi-TRP and mapping of at least one code point of a TCI field to two TCI states may be interchangeably interpreted as each other.

In the present disclosure, TRP #1 (first TRP) may correspond to CORESET pool index = 0, or may correspond to the first TCI state of two TCI states corresponding to one code point of a TCI field. TRP #2 (second TRP) may correspond to CORESET pool index = 1, or may correspond to the second TCI state of two TCI states corresponding to one code point of a TCI field.

In the present disclosure, a single DCI (sDCI), a single PDCCH, a single-DCI based multi-TRP system, an sDCI based MTRP, and activation of two TCI states in at least one TCI code point may be interchangeably interpreted as each other.

In the present disclosure, a multi DCI (mDCI), a multi PDCCH, a multi-DCI based multi-TRP system, an mDCI based MTRP, and configuration of two CORESET pool indexes or CORESET pool index = 1 (or one or more values) may be interchangeably interpreted as each other.

QCL in the present disclosure may be interchangeably interpreted as QCL type D.

"TCI state A is of the same QCL type D as TCI state B", "TCI state A is the same as TCI state B", "TCI state A is of QCL type D with TCI state B", and the like in the present disclosure may be interchangeably interpreted as each other.

In the present disclosure, a DMRS, a DMRS port, and an antenna port may be interchangeably interpreted as each other.

In the present disclosure, the number of monitored PDCCH candidates and the number of blind decodings (blind detections (BDs)) may be interchangeably interpreted as each other. The number of non-overlapped CCEs, the number of CCEs for channel estimation, and the number of CCEs may be interchangeably interpreted as each other.

In the present disclosure, a limit, an upper limit, a restriction, and a maximum number may be interchangeably interpreted as each other.

In the present disclosure, a slot, a span, consecutive symbols, and time domain resources may be interchangeably interpreted as each other.

### (Radio Communication Method)

### <Cases in which UE Is Not Required to Monitor PDCCH Candidates>

The case (rule) in which the UE is not required to monitor the PDCCH candidates may be at least one of the following cases 1 to 7, for example.

### «Case 1»

If at least one resource element (RE) of one PDCCH candidate for one UE in the serving cell overlaps at least one RE of (a rate matching pattern, or a pattern for the UE to perform rate matching around the RE, for example, lte-CRS-ToMatchAround or lte-CRS-ToMatchAround-r16), the UE is not required to monitor the PDCCH candidate.

### <<Case 2>>

For monitoring of one PDCCH candidate by the UE, if the UE satisfies the following conditions 1 to 3, the UE is not required to monitor the PDCCH candidate.

[Condition 1] The UE received an SSB position (ssb-PositionsInBurst) in a burst in a common serving cell configuration (ServingCellConfigCommon) for the serving cell.

[Condition 2] The UE does not monitor the PDCCH candidate in a type0-PDCCH common search space (CSS) set.

[Condition 3] At least one RE for the PDCCH candidate overlaps at least one RE of a candidate SS/PBCH block corresponding to an SS/PBCH block index provided by the SSB position (ssb-PositionsInBurst) in the burst in the common serving cell configuration (ServingCellConfigCommon).

### <<Case 3>>

For monitoring of one PDCCH candidate by the UE, if the UE satisfies the following conditions 1 to 3, the UE is not required to monitor the PDCCH candidate.

[Condition 1] The UE received an SSB position (ssb-PositionsInBurst) in a burst in SIB1, and did not receive an SSB position (ssb-PositionsInBurst) in a burst in a common serving cell configuration (ServingCellConfigCommon) for the serving cell.

[Condition 2] The UE does not monitor the PDCCH candidate in a type0-PDCCH common search space (CSS) set.

[Condition 3] At least one RE for the PDCCH candidate overlaps at least one RE of a candidate SS/PBCH block corresponding to an SS/PBCH block index provided by the SSB position (ssb-PositionsInBurst) in SIB1.

### <<Case 4>>

If the UE is provided with available resource block (RB) sets for each cell (serving cell IDs and positions in DCI, AvailableRB-SetsPerCell-r16), the UE is not required to monitor the PDCCH candidate overlapping any RB out of a plurality of RB sets indicated as unavailable for reception by an available RB set indicator field in DCI format 2_0.

### <<Case 5>>

If the UE reports a requirement (for example, a UE capability information MinTimeGap value) of X slots before the start of a slot in which the UE shall start a discontinuous reception (DRX) duration timer (drx-onDurationTimer) for the active DL BWP, the UE is not required to monitor the PDCCH candidate for detection of DCI format 2_6 in the X slots. Here, X may correspond to the requirement (for example, the UE capability information MinTimeGap value) of the SCS of the active DL BWP in a specification (table for associating the SCS and value 1 and value 2 of a minimum time gap X).

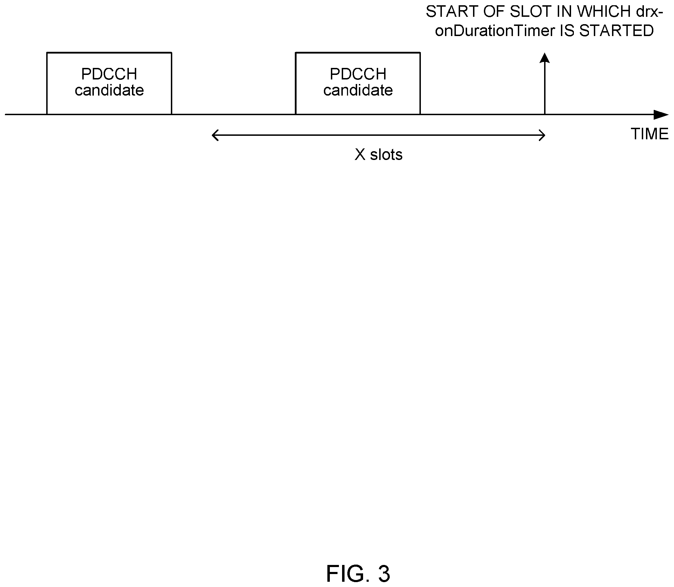

If procedure 1 is used here (if one of two linked PDCCH candidates is present in the X slots before the start of the slot in which the UE shall start drx-onDurationTimer (FIG. 3)), the UE may not be required to monitor both of the two linked PDCCH candidates.

### «Case 6»

If a given PDCCH candidate is not allocated due to PDCCH overbooking, the UE is not required to monitor the PDCCH candidate.

If procedure 1 is used here (if one of two linked PDCCH candidates is not allocated), the UE may not allocate both of the two linked PDCCH candidates for monitoring.

The PDCCH candidate allocation may conform to an existing (Rel. 15/16) procedure, or may conform to at least one of the first to fifth embodiments to be described later.

The existing procedure may conform to the following.
- The CSS set is allocated having the highest priority.
- The USS set is allocated based on order of the SS set index from a lower index to a higher index.
- If all of the PDCCH candidates in a given SS set cannot be allocated due to the UE capability of the maximum number of PDCCH candidates/non-overlapped CCEs per slot/span, all of the PDCCH candidates in the SS set are not allocated.

### <<Case 7>>

The UE is not required to monitor the PDCCH candidate having QCL type D different from that of the CORESET of a high priority determined based on a rule.

The rule for determining the CORESET of a high priority may conform to an existing (Rel, 15/16) procedure, or may conform to at least one of the sixth to seventh embodiments to be described later.

The existing procedure may conform to the following.
- If there is a CSS set having the lowest index in the cell having the lowest index including the CSS, the CORESET of a high priority corresponds to the CSS set. If the CSS set is absent, the CORESET of a high priority corresponds to the USS set having the lowest index in the cell having the lowest index.
- The lowest USS set index is determined over all of the USS sets having at least one PDCCH candidate in overlapping PDCCH monitoring occasions.
- For the purpose of determination of the CORESET of a high priority, it is considered that the SS/PBCH block has a QCL type D property different from the CSI-RS.
- For the purpose of determination of the CORESET of a high priority, it is assumed that the first CSI-RS associated with the SS/PBCH block in the first cell and the second CSI-RS in the second cell associated with the SS/PBCH block have the same QCL type D property.

### <Allocation Assumptions of PDCCH Candidates>

In consideration of a fact that allocation of the PDCCH candidates is performed for each slot/span, any one of the following allocation assumptions 1 and 2 may be assumed.

### [Allocation Assumption 1]

A plurality of PDCCH candidates for repetition are present in the same (one) slot/span.

For allocation assumption 1, in consideration of a fact that the plurality of PDCCH candidates are allocated in a unit of SS set(s), any one of the following allocation assumptions 1-1 and 1-2 is assumed.

### [[Allocation Assumption 1-1]]

The plurality of PDCCH candidates are present in the same (one) SS set.

### [[Allocation Assumption 1-2]]

The plurality of PDCCH candidates are present in different (a plurality of) SS sets.

### [Allocation Assumption 2]

A plurality of PDCCH candidates for repetition are present in different (a plurality of) slots/spans.

Linkage between two SS sets/PDCCH candidates may be defined in a specification, or may be configured.

A fact that the SS sets/the PDCCH candidates/the PDCCH candidates in the SS sets can be allocated, a fact that there is sufficient room for the PDCCH candidates/non-overlapped CCEs for the SS sets/the PDCCH candidates/the PDCCH candidates in the SS sets, a fact that there is a remaining number of PDCCH candidates/non-overlapped CCEs up to the maximum number for the SS sets/the PDCCH candidates/the PDCCH candidates in the SS sets, and a fact that there are sufficient PDCCH candidates/non-overlapped CCEs for the SS sets/the PDCCH candidates/the PDCCH candidates in the SS sets may be interchangeably interpreted as each other.

### <First Embodiment>

In allocation assumption 1-1 (when a plurality of PDCCH candidates are present in the same (one) slot/span and the plurality of PDCCH candidates are present in the same (one) SS set), for one SS set, the procedure of counting up to the maximum number of PDCCH candidates that can be monitored by the UE (procedure of allocation of the PDCCH candidates) may conform to the following.

Two PDCCH candidates having linkage may be counted as 1/2/3/4 (at least one of 1, 2, 3, and 4). A plurality of values out of 1/2/3/4 may be supported. The support of the plurality of values may be dependent upon at least one of a configuration and a UE capability. For example, according to the existing procedure, two PDCCH candidates having linkage are counted as 2.

The present embodiment may be applied to choice 1-2/choice 2 described above.

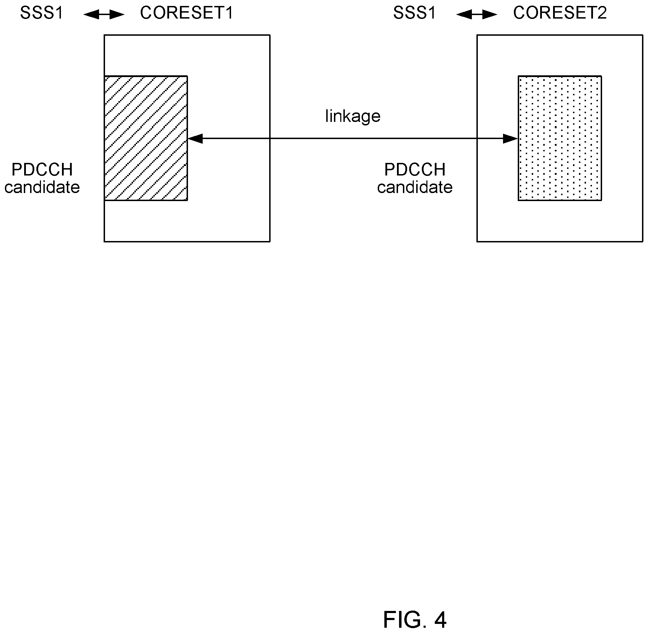

In the example of FIG. 4, regarding CORESETs 1 and 2, a search space set (SSS1) is associated with CORESET 1. The PDCCH candidate in CORESET 1 and the PDCCH candidate in CORESET 2 have linkage. The two PDCCH candidates are counted as 1/2/3/4. In accordance with the method, for one SS set, the PDCCH candidates that can be monitored by the UE may be counted up to the maximum number.

According to the present embodiment, the plurality of PDCCH candidates present in the same (one) slot/span and present in the same (one) SS set can be appropriately counted/allocated.

### <Second Embodiment>

In allocation assumption 1-2 (when a plurality of PDCCH candidates are present in the same (one) slot/span and the plurality of PDCCH candidates are present in different (a plurality of) SS sets), for two SS sets having linkage, the procedure of counting up to the maximum number of PDCCH candidates that can be monitored by the UE (procedure of allocation of the PDCCH candidates) may conform to any one of the following aspects 2-1 to 2-4.

### <<Aspect 2-1>>

Two PDCCH candidates in two SS sets are independently counted and independently allocated (the same as in the existing procedure).

In a case of counting for the SS set having the lower ID out of the two SS sets, when one PDCCH candidate is linked to another PDCCH candidate, the number of PDCCH candidates may be counted as 1.

In a case of counting for the SS set having the higher ID, when one PDCCH candidate is linked to another PDCCH candidate, the number of PDCCH candidates may be counted as 1. In this case, in consideration of additional complexity of soft-combining, the number of PDCCH candidates may be counted as 2 or 3. A plurality of values out of 1/2/3 may be supported. The support of the plurality of values may be dependent upon at least one of a configuration and a UE capability.

The PDCCH candidates may be allocated in order (ascending order) of the SS set ID from the lowest to the highest (the same as in the existing procedure).

If there are not sufficient PDCCH candidates (room for the PDCCH candidates, a remaining number of PDCCH candidates up to the maximum number) for a given SS set, all of the PDCCH candidates in the SS set may not be allocated (may be dropped) (the same as in the existing procedure).

In this case, in some cases, the first PDCCH candidate is allocated and the second PDCCH candidate is dropped (not allocated).

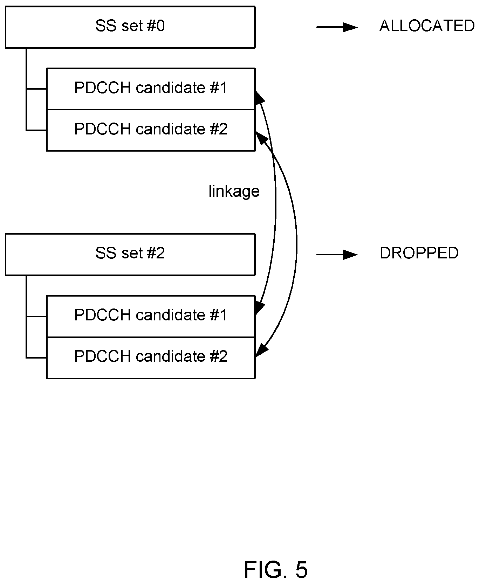

In the example of FIG. 5, PDCCH candidates #1 and #2 in an SS set (SS set #0) having SS set ID = 0 and PDCCH candidates #1 and #2 in an SS set (SS set #2) having SS set ID = 2 are configured. PDCCH candidate #1 in SS set #0 and PDCCH candidate #1 in SS set #2 have linkage, and PDCCH candidate #2 in SS set #0 and PDCCH candidate #2 in SS set #2 have linkage. In ascending order of the SS set ID, PDCCH candidates #1 and #2 in SS set #0 are allocated. Subsequently, if there is not room for allocating PDCCH candidates #1 and #2 in SS set #2 (a remaining number of PDCCH candidates up to the maximum number) through comparison between the count of PDCCH candidates to be allocated and the maximum number, PDCCH candidates #1 and #2 in SS set #2 are dropped (not allocated).

### <<Aspect 2-2>>

Two PDCCH candidates in two SS sets are independently counted and independently allocated. In the PDCCH candidate allocation procedure, the priority of the linked SS sets/PDCCH candidates can be increased.

In the PDCCH candidate allocation procedure, when a plurality of PDCCH candidates in one SS set are allocated, the linked PDCCH candidates/SS sets of later time (associated with a higher ID) may be allocated using a higher priority. The allocation of the PDCCH candidates may conform to any one of the following allocation methods 1 and 2.

### [Allocation Method 1]

All of the PDCCH candidates in the linked SS sets may be allocated using a higher priority.

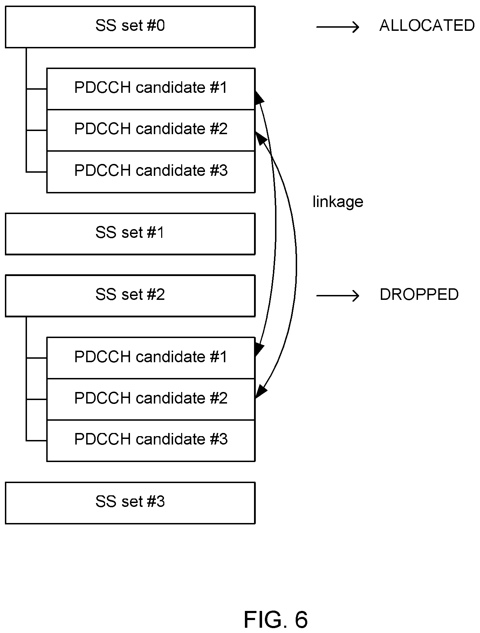

In the example of FIG. 6, SS sets #0 to #3 (SS sets having SS set ID = 0 to 3) are configured, PDCCH candidates #1 to #3 are configured in SS set #0, and PDCCH candidates #1 to #3 are configured in SS set #2. PDCCH candidate #1 in SS set #0 and PDCCH candidate #1 in SS set #2 have linkage, and PDCCH candidate #2 in SS set #0 and PDCCH candidate #2 in SS set #2 have linkage. For example, in accordance with allocation method 1 (descending order of the priority, and subsequently ascending order of the SS set ID), allocation is performed in order of SS set #0, SS set #2, SS set #1, and SS set #3. If there is not room for allocating the PDCCH candidates (a remaining number of PDCCH candidates up to the maximum number) in SS set #2 through comparison between the count of PDCCH candidates to be allocated and the maximum number after the PDCCH candidates in SS set #0 are allocated, the PDCCH candidates are dropped (not allocated).

### [Allocation Method 2]

(Only) the PDCCH candidates having linkage may be allocated using a higher priority. For example, in accordance with allocation method 2 (the PDCCH candidates having linkage, and subsequently ascending order of the SS set ID), in the example of FIG. 6, allocation is performed in order of SS set #0, PDCCH candidates #1 and #2 in SS set #2, SS set #1, PDCCH candidates #1 and #2 in SS set #2, and SS set #3. If there is not room for allocating the PDCCH candidates (a remaining number of PDCCH candidates up to the maximum number) in SS set #2 through comparison between the count of PDCCH candidates to be allocated and the maximum number after the PDCCH candidates in SS set #0 are allocated, the PDCCH candidates are dropped (not allocated).

In the same priority, the PDCCH candidates may be allocated in order (ascending order) of the SS set ID from the lowest to the highest (the same as in the existing procedure).

Other configurations of aspect 2-2 may be the same as those of aspect 2-1.

In this case, in some cases, the first PDCCH candidate is allocated and the second PDCCH candidate is dropped (not allocated).

### <<Aspect 2-3>>

Two SS sets having linkage are counted together (jointly) and allocated together. All of the PDCCH candidates in two SS sets may be counted together and allocated together. This aspect is preferable when all of the PDCCH candidates in two SS sets are configured with linkage. This aspect may be applied when all or some of the PDCCH candidates are configured with linkage.

In a case of counting for the SS set having a lower ID, the SS set linked thereto may be counted together. If one PDCCH candidate is linked to another PDCCH candidate, the number of PDCCH candidates to be allocated may be counted as 1/2/3/4. A plurality of values out of 1/2/3/4 may be supported. The support of the plurality of values may be dependent upon at least one of a configuration and a UE capability. If all of the PDCCH candidates in two SS sets can be allocated, all of the PDCCH candidates in both of the two SS sets may not be allocated. If there are not sufficient PDCCH candidates (room for the PDCCH candidates, a remaining number of PDCCH candidates up to the maximum number) for all of the PDCCH candidates in two SS sets, all of the PDCCH candidates in both of the two SS sets may not be allocated (may be dropped).

In a case of counting for the SS set having a higher ID, if the PDCCH candidates in the SS set are linked to previously allocated PDCCH candidates, the number of PDCCH candidates to be allocated may be counted as 0.

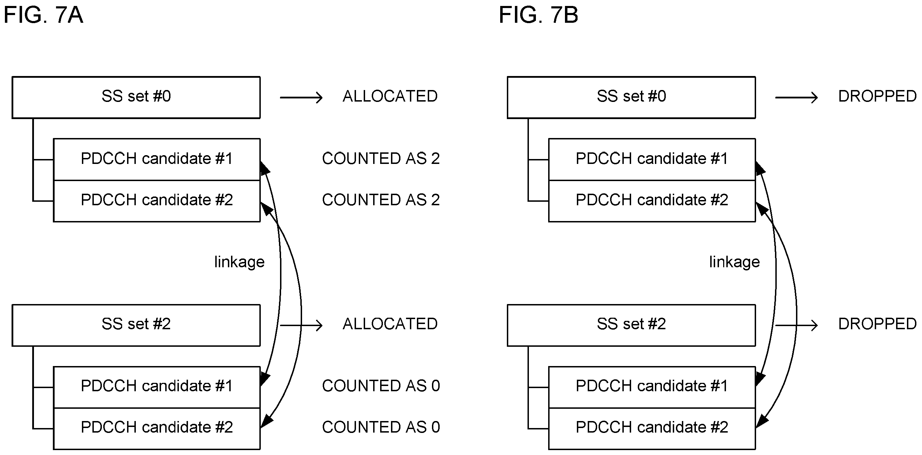

In this case, all of (the PDCCH candidates in) the two SS sets having linkage may be allocated. In the example of FIG. 7A, PDCCH candidates #1 and #2 in SS set #0 and PDCCH candidates #1 and #2 in SS set #2 are configured. PDCCH candidate #1 in SS set #0 and PDCCH candidate #1 in SS set #2 have linkage, and PDCCH candidate #2 in SS set #0 and PDCCH candidate #2 in SS set #2 have linkage. PDCCH candidate #1 in SS set #0 is counted as 2. PDCCH candidate #1 in SS set #2 linked thereto is not counted. PDCCH candidate #2 in SS set #0 is counted as 2. PDCCH candidate #2 in SS set #2 linked thereto is not counted. When the count of (if there is room) PDCCH candidates #1 and #2 in SS set #0 and PDCCH candidates #1 and #2 in SS set #2 is equal to or less than the maximum number, all of these PDCCH candidates are allocated.

In this case, all of (the PDCCH candidates in) the two SS sets having linkage may be dropped. In the example of FIG. 7B, PDCCH candidate #1 in SS set #0 and PDCCH candidate #1 in SS set #2 have linkage, and PDCCH candidate #2 in SS set #0 and PDCCH candidate #2 in SS set #2 have linkage. When the count of (if there is not room) PDCCH candidates #1 and #2 in SS set #0 and PDCCH candidates #1 and #2 in SS set #2 exceeds the maximum number, all of these PDCCH candidates are dropped (not allocated).

### <<Aspect 2-4>>

Two PDCCH candidates having linkage are counted together and allocated together. Only the PDCCH candidates having linkage in two SS sets may be counted together and allocated together. This aspect is preferable when some (a part) of the PDCCH candidates in the two SS sets are configured with linkage, and other PDCCH candidates in the two SS sets are configured without linkage.

In a case of counting for the SS set having a lower ID, if one PDCCH candidate is linked to another PDCCH candidate, the number of PDCCH candidates to be allocated may be counted as 1/2/3/4. A plurality of values out of 1/2/3/4 may be supported. The support of the plurality of values may be dependent upon at least one of a configuration and a UE capability. If all of the PDCCH candidates in the first SS set and the PDCCH candidates linked to the PDCCH candidates in the second SS set can be allocated, all of the PDCCH candidates in the first SS set and the PDCCH candidates linked to the PDCCH candidates in the second SS set may be allocated. If there are not sufficient PDCCH candidates (room for the PDCCH candidates, a remaining number of PDCCH candidates up to the maximum number) for all of the PDCCH candidates in the first SS set and the PDCCH candidates linked to the PDCCH candidates in the second SS set, all of the PDCCH candidates in the first SS set and the PDCCH candidates linked to the PDCCH candidates in the second SS set may not be allocated (may be dropped).

In a case of counting for the SS set having a higher ID, if the PDCCH candidates in the SS set are linked to previously allocated PDCCH candidates, the number of PDCCH candidates to be allocated may be counted as 0.

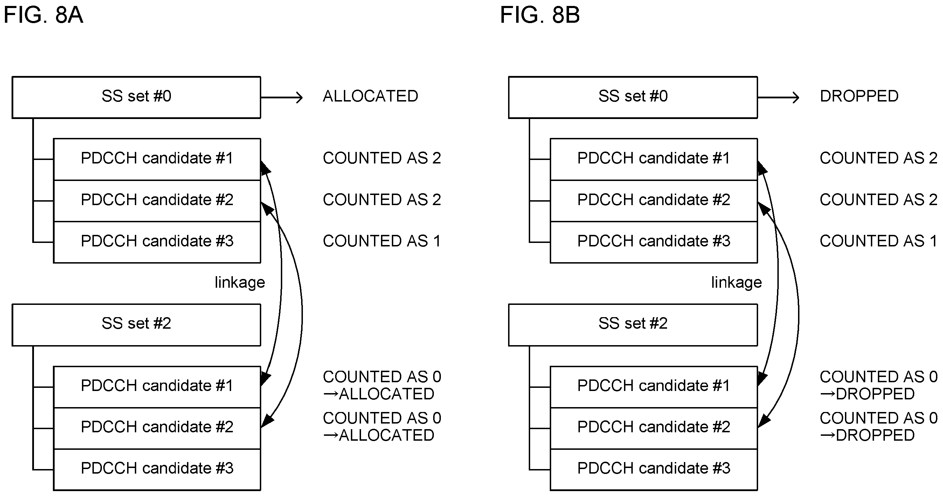

In this case, all of (the PDCCH candidates in) the two SS sets having linkage may be allocated. In the example of FIG. 8A, PDCCH candidates #1 to #3 in SS set #0 and PDCCH candidates #1 to #3 in SS set #2 are configured. PDCCH candidate #1 in SS set #0 and PDCCH candidate #1 in SS set #2 have linkage, and PDCCH candidate #2 in SS set #0 and PDCCH candidate #2 in SS set #2 have linkage. PDCCH candidate #1 in SS set #0 is allocated and has linkage, and is thus counted as 2. PDCCH candidate #1 in SS set #0 is counted as 2. PDCCH candidate #1 in SS set #2 linked thereto is not counted. PDCCH candidate #2 in SS set #0 has linkage, and is thus counted as 2. PDCCH candidate #2 in SS set #2 linked thereto is not counted. PDCCH candidate #3 in SS set #0 does not have linkage, and is thus counted as 1. The count of PDCCH candidate #3 in SS set #2 may conform to the existing procedure. When the count of (if there is room) PDCCH candidates #1, #2, and #3 in SS set #0 and PDCCH candidates #1 and #2 in SS set #2 is equal to or less than the maximum number, all of these PDCCH candidates are allocated.

In this case, all of (the PDCCH candidates in) the two SS sets having linkage may be dropped. In the example of FIG. 8B, PDCCH candidate #1 in SS set #0 and PDCCH candidate #1 in SS set #2 have linkage, and PDCCH candidate #2 in SS set #0 and PDCCH candidate #2 in SS set #2 have linkage. The count of PDCCH candidate #3 in SS set #2 may conform to the existing procedure. When the count of (if there is not room) PDCCH candidates #1, #2, and #3 in SS set #0 and PDCCH candidates #1 and #2 in SS set #2 exceeds the maximum number, all of these PDCCH candidates are dropped (not allocated).

According to the present embodiment, the plurality of PDCCH candidates present in the same (one) slot/span and present in different (a plurality of) SS sets can be appropriately counted/allocated.

### <Analysis>

According to aspects 2-3 and 2-4 described above, when two PDCCH candidates are present in the same slot/span, the PDCCH candidates in two SS sets having linkage are counted together (jointly). The PDCCH candidates are allocated or dropped at the SS set level (with the SS set being a unit). Similarly to Rel. 15/16, if two linked SS sets cannot be allocated, all of the subsequent SS sets cannot be allocated.

However, when two SS sets counted together are used, it is more likely that there is not sufficient room for the PDCCH candidates (a remaining number of PDCCH candidates up to the maximum number), in comparison to Rel. 15/16. In order to secure allocation of more PDCCH candidates, a further enhancement may be performed regarding the overbooking (PDCCH candidate allocation) procedure. The following allocation assumption 3 may be assumed.

### [Allocation Assumption 3]

- Two PDCCH candidates in two SS sets having a plurality of corresponding CORESETs are used for multi TRP PDCCH repetition.
- Two PDCCH candidates/two SS sets/two CORESETs are explicitly linked to each other. The linkage may be determined according to a rule defined in a specification, or may be configured with higher layer signaling.
- The two linked PDCCH candidates for repetition are present in the same slot/span.

### <Third Embodiment>

If both of the two linked PDCCH candidates cannot be allocated, a fallback to the existing procedure is permitted. The present embodiment may be applied to allocation assumption 3.

The UE may conform to at least one of the following aspects 3-1 and 3-2.

### <<Aspect 3-1>>

Two SS sets (for example, SS set x and SS set y) having linkage are counted together and allocated together. This is an enhancement based on aspect 2-3.

If all of the PDCCH candidates in the two SS sets can be allocated, all of the PDCCH candidates in both of the two SS sets may be allocated.

After the two sets are allocated, the UE/base station may transfer to the following procedure 3-1-1 (reusing the existing procedure).

### [Procedure 3-1-1]

The UE/base station may determine whether or not the subsequent SS set of the SS set (for example, SS set x) having the lower ID out of the two SS sets can be allocated. The order of allocation/determination may be based on the order of the SS set ID from a low ID to a high ID. If there is sufficient room for the PDCCH candidates (a remaining number of PDCCH candidates up to the maximum number)/room for the non-overlapped CCEs (a remaining number of non-overlapped CCEs up to the maximum number), the subsequent SS set may be allocated.

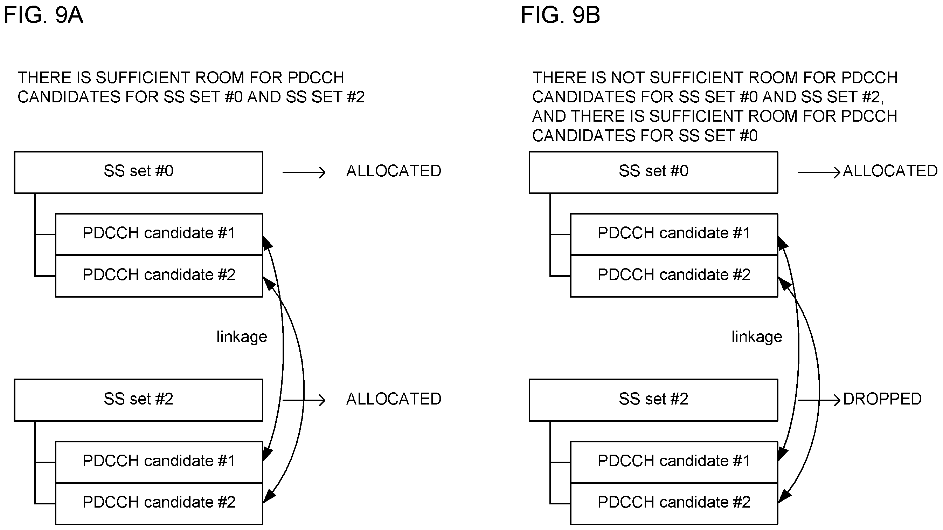

In the examples of FIGS. 9A and 9B, PDCCH candidates #1 and #2 in SS set #0 (SS set ID = 0) and PDCCH candidates #1 and #2 in SS set #2 (SS set ID = 2) are configured. PDCCH candidate #1 in SS set #0 and PDCCH candidate #1 in SS set #2 have linkage, and PDCCH candidate #2 in SS set #0 and PDCCH candidate #2 in SS set #2 have linkage.

In the example of FIG. 9A, if there is sufficient room for the PDCCH candidates/non-overlapped CCEs for SS sets #0 and #2, SS sets #0 and #2 are allocated.

If there is not sufficient room for the PDCCH candidates (a remaining number of PDCCH candidates up to the maximum number)/room for the non-overlapped CCEs (a remaining number of non-overlapped CCEs up to the maximum number) for all of the PDCCH candidates in the two SS sets, the UE/base station may fall back to the following existing procedure 3-1-2 (reusing the existing procedure).

### [Procedure 3-1-2]

If there is sufficient room for the PDCCH candidates (a remaining number of PDCCH candidates up to the maximum number)/room for the non-overlapped CCEs (a remaining number of non-overlapped CCEs up to the maximum number) for the PDCCH candidates in the SS set (for example, SS set x) having the lower ID out of the two SS sets, SS set x may be allocated. After SS set x is allocated, the UE/base station may determine whether or not the subsequent SS set of SS set x can be allocated. The order of allocation may be based on the order of the SS set ID from a low ID to a high ID. If there is sufficient room for the PDCCH candidates (a remaining number of PDCCH candidates up to the maximum number)/room for the non-overlapped CCEs (a remaining number of non-overlapped CCEs up to the maximum number), the subsequent SS set may be allocated.

In the example of FIG. 9B, if there is not sufficient room for the PDCCH candidates/non-overlapped CCEs for SS sets #0 and #2, and there is sufficient room for the PDCCH candidates/non-overlapped CCEs for the PDCCH candidates in SS set #0 (lower ID), SS set #0 is allocated, and SS set #2 is dropped (not allocated).

### <<Aspect 3-2>>

Two PDCCH candidates in two SS sets (for example, SS set x and SS set y) having linkage are counted together and allocated together. This is an enhancement based on aspect 2-4.

If all of the PDCCH candidates (for example, a plurality of PDCCH candidates a) in the SS set (for example, SS set x) having the lower ID out of the two SS sets and the PDCCH candidates (for example, a plurality of PDCCH candidates b) linked to the PDCCH candidates a in the SS set (for example, SS set y) having the higher ID can be allocated, the PDCCH candidates a and the PDCCH candidates b may be allocated.

After the allocation, whether or not the subsequent SS set of SS set x can be allocated may be determined. The order of allocation may be based on the order of the SS set ID from a low ID to a high ID. If there is sufficient room for the PDCCH candidates (a remaining number of PDCCH candidates up to the maximum number)/room for the non-overlapped CCEs (a remaining number of non-overlapped CCEs up to the maximum number), the subsequent SS set may be allocated.

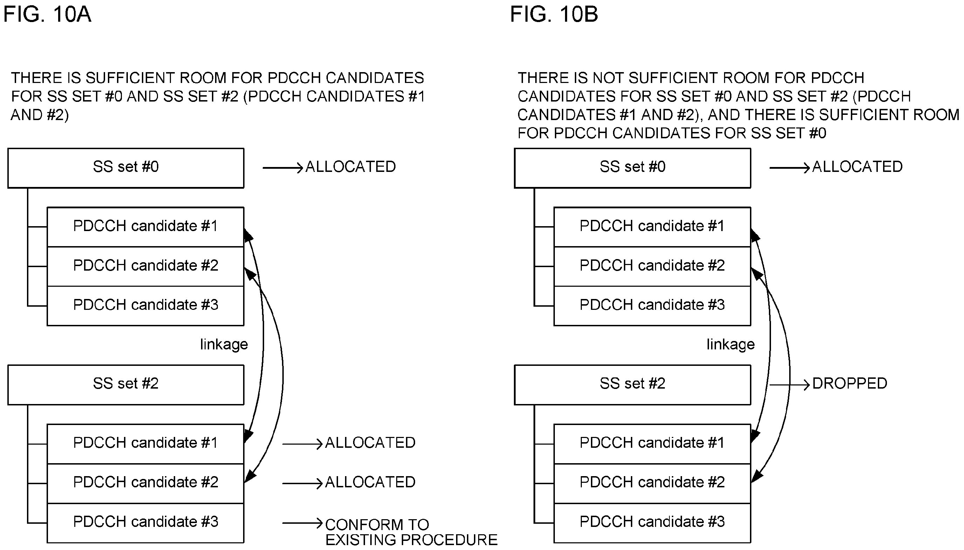

In the examples of FIGS. 10A and 10B, PDCCH candidates #1 and #2 in SS set #0 (SS set ID = 0) and PDCCH candidates #1, #2, and #3 in SS set #2 (SS set ID = 2) are configured. PDCCH candidate #1 in SS set #0 and PDCCH candidate #1 in SS set #2 have linkage, and PDCCH candidate #2 in SS set #0 and PDCCH candidate #2 in SS set #2 have linkage.

In the example of FIG. 10A, if there is sufficient room for the PDCCH candidates/non-overlapped CCEs for PDCCH candidates #1 and #2 in SS set #0 and PDCCH candidates #1 and #2 in SS set #2 linked thereto, PDCCH candidates #1 and #2 in SS set #0 and PDCCH candidates #1 and #2 in SS set #2 linked thereto are allocated. PDCCH candidate #3 in SS set #2 conforms to the existing procedure.

If there is not sufficient room for the PDCCH candidates (a remaining number of PDCCH candidates up to the maximum number)/room for the non-overlapped CCEs (a remaining number of non-overlapped CCEs up to the maximum number) for all of the PDCCH candidates (for example, a plurality of PDCCH candidates a) in the SS set (for example, SS set x) having the lower ID out of the two SS sets and the PDCCH candidates (for example, a plurality of PDCCH candidates b) linked to the PDCCH candidates a in the SS set (for example, SS set y) having the higher ID, the UE/base station may fall back to the following existing procedure 3-2 (reusing the existing procedure).

### [Procedure 3-2]

If there is sufficient room for the PDCCH candidates (a remaining number of PDCCH candidates up to the maximum number)/room for the non-overlapped CCEs (a remaining number of non-overlapped CCEs up to the maximum number) for the PDCCH candidates in the SS set (for example, SS set x) having the lower ID out of the two SS sets, SS set x may be allocated. After SS set x is allocated, the UE/base station may determine whether or not the subsequent SS set of SS set x can be allocated. The order of allocation may be based on the order of the SS set ID from a low ID to a high ID. If there is sufficient room for the PDCCH candidates (a remaining number of PDCCH candidates up to the maximum number)/room for the non-overlapped CCEs (a remaining number of non-overlapped CCEs up to the maximum number), the subsequent SS set may be allocated.

In the example of FIG. 10B, if there is not sufficient room for the PDCCH candidates/non-overlapped CCEs for PDCCH candidates #1 and #2 in SS set #0 and PDCCH candidates #1 and #2 in SS set #2 linked thereto, and there is sufficient room for the PDCCH candidates/non-overlapped CCEs for the PDCCH candidates in SS set #0 (lower ID), SS set #0 is allocated, and SS set #2 is dropped (not allocated).

According to the present embodiment, the plurality of PDCCH candidates present in the same (one) slot/span and present in different (a plurality of) SS sets can be appropriately counted/allocated.

### <Fourth Embodiment>

A plurality of PDCCH candidates are allocated or dropped at the PDCCH candidate level (with the PDCCH candidate being a unit). The present embodiment may be applied to allocation assumption 3.

The UE/base station may allocate the PDCCH candidates at the PDCCH candidate level (with the PDCCH candidate being a unit). Two PDCCH candidates having linkage may be counted together and allocated together.

The UE/base station may allocate the PDCCH candidates, based on order of the PDCCH candidate ID from a low ID to a high ID in each SS set.

When the order reaches the PDCCH candidate not having linkage, the UE/base station may determine whether or not the PDCCH can be allocated. If there is sufficient room for the PDCCH candidates (a remaining number of PDCCH candidates up to the maximum number)/room for the non-overlapped CCEs (a remaining number of non-overlapped CCEs up to the maximum number) for the PDCCH candidate, the PDCCH candidate may be allocated. If there is not sufficient room for the PDCCH candidates (a remaining number of PDCCH candidates up to the maximum number)/room for the non-overlapped CCEs (a remaining number of non-overlapped CCEs up to the maximum number) for the PDCCH candidate, the PDCCH candidate and its subsequent PDCCH candidates may not be allocated.

When the order reaches a PDCCH candidate (for example, PDCCH candidate x) linked to another PDCCH candidate, the UE/base station may determine whether or not the two linked PDCCH candidates can be allocated. If there is sufficient room for the PDCCH candidates (a remaining number of PDCCH candidates up to the maximum number)/room for the non-overlapped CCEs (a remaining number of non-overlapped CCEs up to the maximum number) for the two linked PDCCH candidates, the two linked PDCCH candidates may be allocated. If there is not sufficient room for the PDCCH candidates (a remaining number of PDCCH candidates up to the maximum number)/room for the non-overlapped CCEs (a remaining number of non-overlapped CCEs up to the maximum number) for the two linked PDCCH candidates, the UE/base station may conform to any one of the following choices 1 and 2.

### [Choice 1]

The two linked PDCCH candidates and their subsequent PDCCH candidates are not allocated.

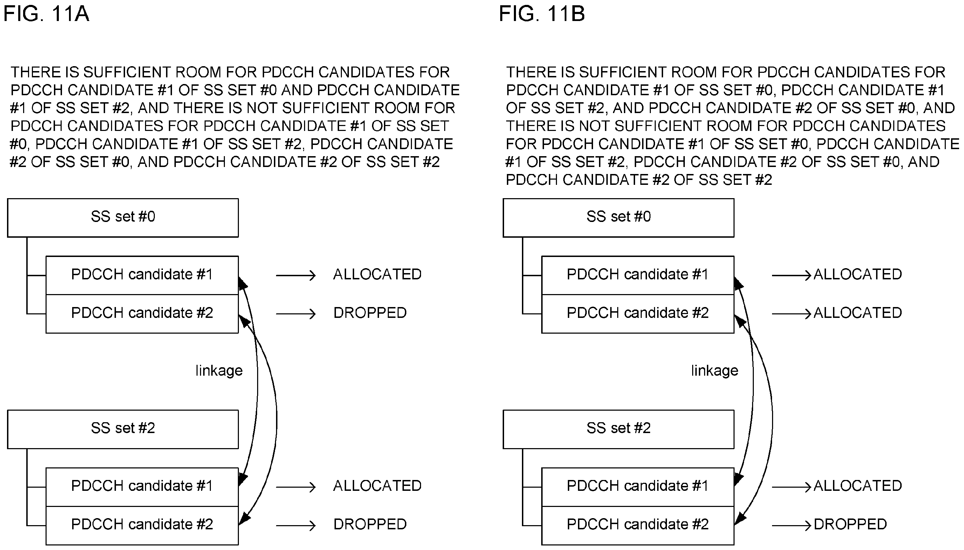

In the examples of FIGS. 11A and 11B, PDCCH candidates #1 (PDCCH candidate ID = 1) and #2 (PDCCH candidate ID = 2) in SS set #0 (SS set ID = 0) and PDCCH candidates #1 (PDCCH candidate ID = 1) and #2 (PDCCH candidate ID = 2) in SS set #2 (SS set ID = 2) are configured. PDCCH candidate #1 in SS set #0 and PDCCH candidate #1 in SS set #2 have linkage, and PDCCH candidate #2 in SS set #0 and PDCCH candidate #2 in SS set #2 have linkage.

In the example of FIG. 11A, if there is sufficient room for the PDCCH candidates/non-overlapped CCEs for PDCCH candidate #1 in SS set #0 and PDCCH candidate #1 in SS set #2 linked thereto, and there is not sufficient room for the PDCCH candidates/non-overlapped CCEs for PDCCH candidate #1 in SS set #0, PDCCH candidate #1 in SS set #2 linked thereto, PDCCH candidate #2 in SS set #0, and PDCCH candidate #2 in SS set #2 linked thereto, PDCCH candidate #1 in SS set #0 and PDCCH candidate #1 in SS set #2 are allocated, and PDCCH candidate #2 in SS set #0 and PDCCH candidate #2 in SS set #2 are dropped (not allocated).

### [Choice 2]

The UE/base station determines whether or not the PDCCH candidate x can be allocated. If there is sufficient room for the PDCCH candidates (a remaining number of PDCCH candidates up to the maximum number)/room for the non-overlapped CCEs (a remaining number of non-overlapped CCEs up to the maximum number) for the PDCCH candidate x, the PDCCH candidate x may be allocated. After the PDCCH candidate x is allocated, the UE/base station may determine whether or not the subsequent PDCCH candidate of the PDCCH candidate x can be allocated based on the order of the PDCCH candidate ID.

In the example of FIG. 11B, if there is sufficient room for the PDCCH candidates/non-overlapped CCEs for PDCCH candidate #1 in SS set #0, PDCCH candidate #1 in SS set #2 linked thereto, and PDCCH candidate #2 in SS set #0, and there is not sufficient room for the PDCCH candidates/non-overlapped CCEs for PDCCH candidate #1 in SS set #0, PDCCH candidate #1 in SS set #2 linked thereto, PDCCH candidate #2 in SS set #0, and PDCCH candidate #2 in SS set #2 linked thereto, PDCCH candidate #1 in SS set #0, PDCCH candidate #1 in SS set #2, and PDCCH candidate #2 in SS set #0 are allocated, and PDCCH candidate #2 in SS set #2 is dropped (not allocated).

According to the present embodiment, the plurality of PDCCH candidates present in the same (one) slot/span and present in different (a plurality of) SS sets can be appropriately counted/allocated.

### <Fifth Embodiment>

In allocation assumption 2 (when a plurality of PDCCH candidates are present in different (a plurality of) slots/spans), for two slots/spans having the SS sets/PDCCH candidates having linkage, the procedure of counting up to the maximum number of PDCCH candidates that can be monitored by the UE (procedure of allocation of the PDCCH candidates) may conform to any one of the following aspects 5-1 and 5-2.

### <<Aspect 5-1>>

Two PDCCH candidates in two slots/spans are independently counted (the same as in the existing procedure).

In a case of counting for the first slot/span, if one PDCCH candidate is linked to another PDCCH candidate, the number of PDCCH candidates may be counted as 1.

In a case of counting for the (second) slot/span of later time, if one PDCCH candidate is linked to another PDCCH candidate, the number of PDCCH candidates may be counted as 1. In this case, in consideration of additional complexity of soft-combining, the number of PDCCH candidates may be counted as 2 or 3. A plurality of values out of 1/2/3 may be supported. The support of the plurality of values may be dependent upon at least one of a configuration and a UE capability.

The PDCCH candidates may be allocated in order (ascending order) of the SS set ID from the lowest to the highest (the same as in the existing procedure).

If there are not sufficient PDCCH candidates (room for the PDCCH candidates, a remaining number of PDCCH candidates up to the maximum number) for a given SS set, all of the PDCCH candidates in the SS set may not be allocated (may be dropped) (the same as in the existing procedure).

In this case, in some cases, the first PDCCH candidate is allocated and the second PDCCH candidate is dropped (not allocated).

Linkage between two SS sets/PDCCH candidates may be defined in a specification, or may be configured.

Aspect 5-1 may be applied to choice 1-2/1-3/2/3 described above.

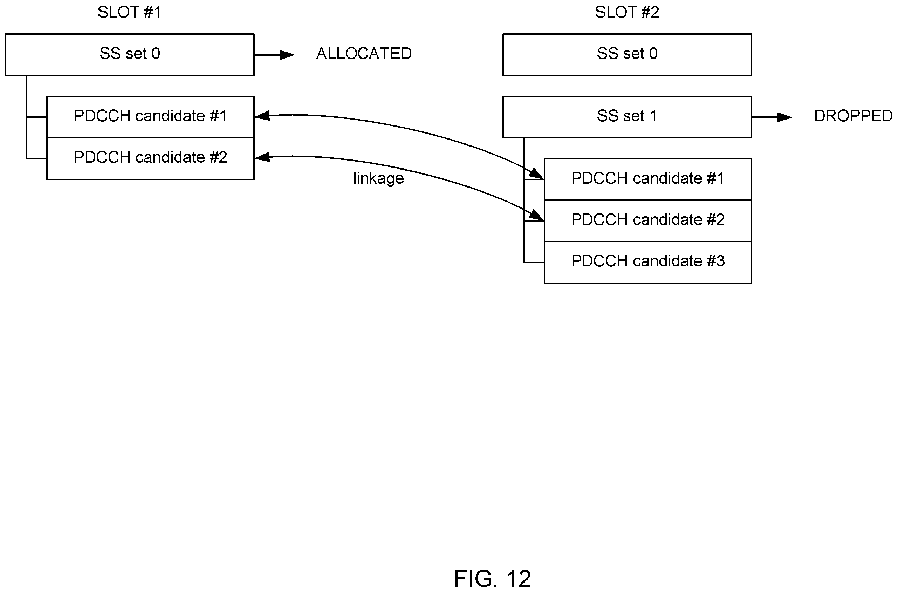

In the example of FIG. 12, SS set 0 is configured in slots #1 and #2, and SS set 1 is configured in slot #2. PDCCH candidates #1 and #2 are configured in SS set 0 in slot #1, and PDCCH candidates #1, #2, and #3 are configured in SS set 1 in slot #2. PDCCH candidate #1 in SS set 0 in slot #1 and PDCCH candidate #1 in SS set 1 in slot #2 have linkage, and PDCCH candidate #2 in SS set 0 in slot #1 and PDCCH candidate #2 in SS set 1 in slot #2 have linkage. When the count of (if there is room) PDCCH candidates #1 and #2 in SS set 0 in slot #1 is equal to or less than the maximum number, these PDCCH candidates are allocated. When the count of (if there is not room) PDCCH candidates #1, #2, and #3 in SS set 1 in slot #2 exceeds the maximum number, these PDCCH candidates are dropped (not allocated).

### <<Aspect 5-2>>

Two PDCCH candidates in two slots/spans are independently counted and independently allocated. In the PDCCH candidate allocation procedure, the priority of the linked SS sets/PDCCH candidates can be increased.

In the PDCCH candidate allocation procedure, the PDCCH candidates of the first slot/span in one SS set are allocated, and in a slot/span of later time, the PDCCH candidates/SS sets linked to the PDCCH candidates may be allocated using a higher priority. The allocation of the PDCCH candidates may conform to any one of the following allocation methods 1 and 2.

### [Allocation Method 1]

All of the PDCCH candidates in the linked SS sets may be allocated using a higher priority.

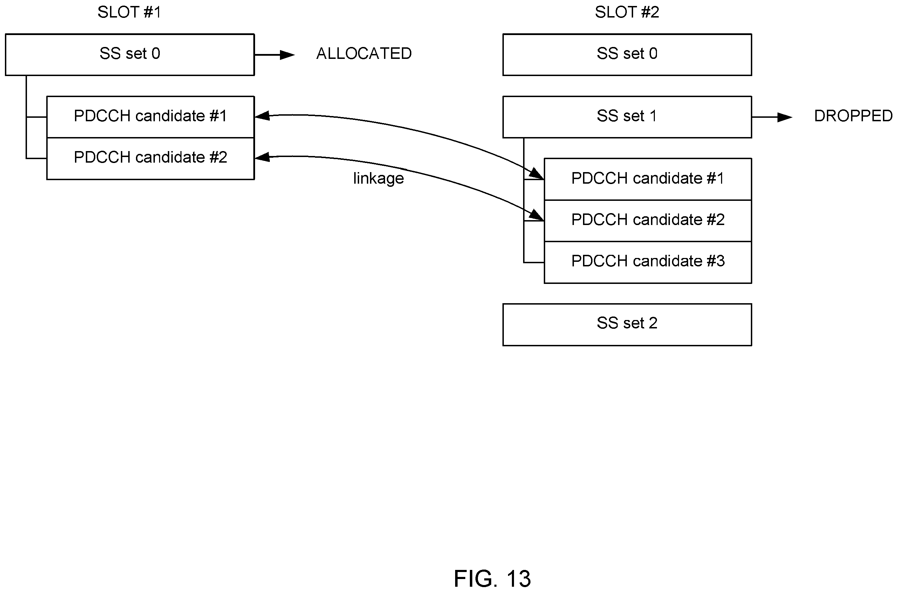

In the example of FIG. 13, SS set 0 is configured in slots #1 and #2, and SS set 1 and SS set 2 are configured in slot #2. PDCCH candidates #1, #2, and #3 are configured in SS set 0 in slot #1, and PDCCH candidates #1, #2, and #3 are configured in SS set 1 in slot #2. PDCCH candidate #1 in SS set 0 in slot #1 and PDCCH candidate #1 in SS set 1 in slot #2 have linkage, and PDCCH candidate #2 in SS set 0 in slot #1 and PDCCH candidate #2 in SS set 1 in slot #2 have linkage. For example, in accordance with allocation method 1 (ascending order of the slot/span, subsequently descending order of the priority, and subsequently ascending order of the SS set ID), SS set 0 is allocated in slot #0, and in slot #1, allocation is performed in order of SS set 1, SS set 0, and SS set 2. If there is not room for allocating the PDCCH candidates (a remaining number of PDCCH candidates up to the maximum number) in SS set 1 in slot #1 through comparison between the count of PDCCH candidates to be allocated and the maximum number, the PDCCH candidates are dropped (not allocated).

### [Allocation Method 2]

(Only) the PDCCH candidates having linkage may be allocated using a higher priority. For example, in accordance with allocation method 2 (ascending order of the slot/span, subsequently the PDCCH candidates having linkage, and subsequently the ascending order of the SS set ID), in the example of FIG. 13, SS set 0 is allocated in slot #0, and in slot #1, allocation is performed in order of PDCCH candidates #1 and #2 in SS set 1, SS set 0, PDCCH candidate #3 in SS set 1, and SS set 2. If there is not room for allocating the PDCCH candidates (a remaining number of PDCCH candidates up to the maximum number) in SS set 1 in slot #1 through comparison between the count of PDCCH candidates to be allocated and the maximum number, the PDCCH candidates are dropped (not allocated).

In the same priority, the PDCCH candidates may be allocated in order (ascending order) of the SS set ID from the lowest to the highest (the same as in the existing procedure). The PDCCH candidates may be allocated in order (ascending order) of the linked SS set ID in a previous slot/span, from the lowest to the highest. For example, when SS set 0 in slot #1 is linked to SS set 1 in slot #2 and SS set 1 in slot #1 is linked to SS set 0 in slot #2, in slot #2, the priority of SS set 1 may be higher than the priority of SS set 0.

In this case, in some cases, the first PDCCH candidate is allocated and the second PDCCH candidate is dropped (not allocated).

Other configurations of aspect 5-2 may be the same as those of aspect 5-1.

According to the present embodiment, the plurality of PDCCH candidates present in different (a plurality of) slots/spans can be appropriately counted/allocated.

### <Sixth Embodiment>

The following embodiments are described based on the assumption of being applied to a case in which the UE supports simultaneous reception of two or more channels/signals of different QCL types D. However, the following embodiments may be applied to other cases.

The present embodiment relates to an SFN PDCCH repetition scheme.

In the present embodiment, two or more TCI states may be activated for one CORESET. Activation of the TCI states for the CORESET may be indicated for the UE using a MAC CE.

In the present embodiment, when a plurality of PDCCHs of different QCL types D collide, the UE determines the PDCCH (CORESET) to be monitored, based on at least one of the priority rules described in Embodiments 1.1 to 1.3. Each of them will be described below.

In the following, in the present disclosure, the CORESET to be monitored determined based on the priority rule is also simply referred to as a "prioritized CORESET", a CORESET of the highest priority, or the like.

### [Embodiment 1.1]

The priority rule of Embodiment 1.1 is the same as that of Rel-16 NR. In other words, the UE determines the prioritized CORESET in accordance with a priority rule that the CSS set is preferentially monitored over the USS set, and that, among the SS sets of the same type (CSS or USS), the SS set having the smaller index (in other words, the SS set having the smaller cell index; the SS set having the smaller SS set index when the SS sets have the same cell index) is preferentially monitored.

Embodiment 1.1 is further broadly classified into the following two:
- Embodiment 1.1.1: The prioritized CORESET has two active TCI states (two QCL types D).
- Embodiment 1.1.2: The prioritized CORESET has one active TCI state (one QCL type D).

### [[Embodiment 1.1.1]]

Regarding a CORESET having one active TCI state other than the prioritized CORESET, when the one active TCI state is of the same QCL type D as two active TCI states of the prioritized CORESET, the UE may monitor the CORESET.

Regarding a CORESET having two active TCI states other than the prioritized CORESET, when the following condition (1.1.1a) or (1.1.1b) is satisfied, the UE may monitor the CORESET:
(1.1.1a) The two active TCI states are of the same QCL type D as two active TCI states of the prioritized CORESET.
(1.1.1b) One of the two active TCI states is of the same QCL type D as one of two active TCI states of the prioritized CORESET.

Note that, when (1.1.1b) above is satisfied, the UE monitors the CORESET by applying only the TCI state of the same QCL type D as one of the two active TCI states of the prioritized CORESET.

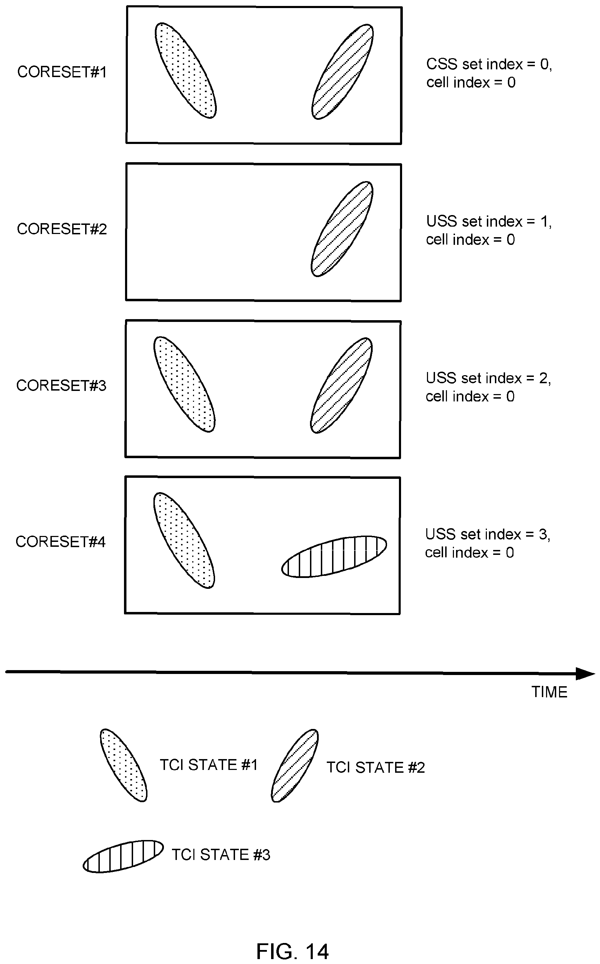

FIG. 14 is a diagram to show an example of the prioritized CORESET and other CORESETs to be simultaneously monitored according to Embodiment 1.1.1. In the present example, four CORESETs (CORESETs #1 to #4) overlap with respect to time.

CORESET #1 corresponds to CSS set index = 0 and cell index = 0, and has two active TCI states (TCI states #1 and #2).

CORESET #2 corresponds to USS set index = 1 and cell index = 0, and has one active TCI state (TCI state #2).

CORESET #3 corresponds to USS set index = 2 and cell index = 0, and has two active TCI states (TCI states #1 and #2).

CORESET #4 corresponds to USS set index = 3 and cell index = 0, and has two active TCI states (TCI states #1 and #3).

In the case of FIG. 14, first, the UE selects CORESET #1 corresponding to the CSS set as the prioritized CORESET. CORESET #1 has two active TCI states, and thus conforms to the operation of Embodiment 1.1.1.

One TCI state of CORESET #2 is of the same QCL type D as TCI state #2 of the prioritized CORESET, and thus the UE monitors CORESET #2.

The two TCI states of CORESET #3 are of the same QCL type D as TCI states #1 and #2 of the prioritized CORESET, and thus the UE monitors CORESET #3.

One of the two TCI states of CORESET #4 are of the same QCL type D as TCI state #1 of the prioritized CORESET, whereas the other is of a different QCL type D (TCI state #3) from TCI state #2 of the prioritized CORESET. Thus, the UE in accordance with (1.1.1a) above does not monitor CORESET #4. The UE in accordance with (1.1.1b) above monitors CORESET #4 by applying only TCI state #1.

### [[Embodiment 1.1.2]]

Regarding Embodiment 1.1.2, a prioritized CORESET having one active TCI state first determined in accordance with the same priority rule as Rel. 16 NR is also referred to as a first prioritized CORESET, and a subsequently determined prioritized CORESET other than the first prioritized CORESET is also referred to as a second prioritized CORESET. The second prioritized CORESET may be referred to as CORESET X.

One active TCI state of the first prioritized CORESET may be referred to as a 1st priority TCI state. Any one active TCI state of the second prioritized CORESET may be referred to as a 2nd priority TCI state.

Embodiment 1.1.2 is broadly classified into Embodiments 1.1.2.1 and 1.1.2.2, depending upon a determination method of the second prioritized CORESET.

### [[Embodiment 1.1.2.1]]

The second prioritized CORESET may be determined in accordance with the same priority rule as Rel. 16 out of the remaining colliding CORESETs except for the first prioritized CORESET. In other words, the second prioritized CORESET may correspond to, if any, the CSS set having the minimum index in a cell having the minimum index including the CSS set out of the remaining colliding CORESETs, otherwise, the second prioritized CORESET may correspond to the USS set having the minimum index in the cell having the minimum index. The minimum USS set index is determined over all of the USS sets having at least one PDCCH candidate in the overlapping PDCCH monitoring occasions.

When the candidate of the second prioritized CORESET derived in accordance with the priority rule has only one active TCI state, and the active TCI state is the same as the 1st priority TCI state, the subsequent candidate (the CORESET corresponding to the subsequent SS set/cell having the minimum index) may be searched as a candidate of the second prioritized CORESET. In other words, regarding the CORESET having only one active TCI state, the UE may continue the search of the second prioritized CORESET until the active TCI state becomes different from the 1st priority TCI state.

When the CORESET having only one active TCI state different from the 1st priority TCI state is detected, in accordance with the priority rule, the UE may determine the active TCI state as the 2nd priority TCI state, and determine the CORESET as the second prioritized CORESET.

Note that, even when the candidate of the second prioritized CORESET derived in accordance with the priority rule has only one active TCI state, and the active TCI state is the same as the 1st priority TCI state, the UE may determine the active TCI state as the 2nd priority TCI state, and determine the candidates as the second prioritized CORESET. In this case, the second prioritized CORESET is the same as the first prioritized CORESET, and thus it may be expressed that there is no second prioritized CORESET.

When the candidate of the second prioritized CORESET derived in accordance with the priority rule has two active TCI states, and one of the two active TCI states is the same as the 1st priority TCI state, the UE may determine the other of the two active TCI states as the 2nd priority TCI state, and determine the candidate as the second prioritized CORESET.

When the candidate of the second prioritized CORESET derived in accordance with the priority rule has two active TCI states, and both of the two active TCI states are different from the 1st priority TCI state, the UE may determine one of the two active TCI states as the 2nd priority TCI state, and determine the candidate as the second prioritized CORESET. The one TCI state may be a TCI state having the minimum or maximum TCI state ID out of the two active TCI states, or may be a TCI state corresponding to the first or second TCI state activated by a MAC CE.

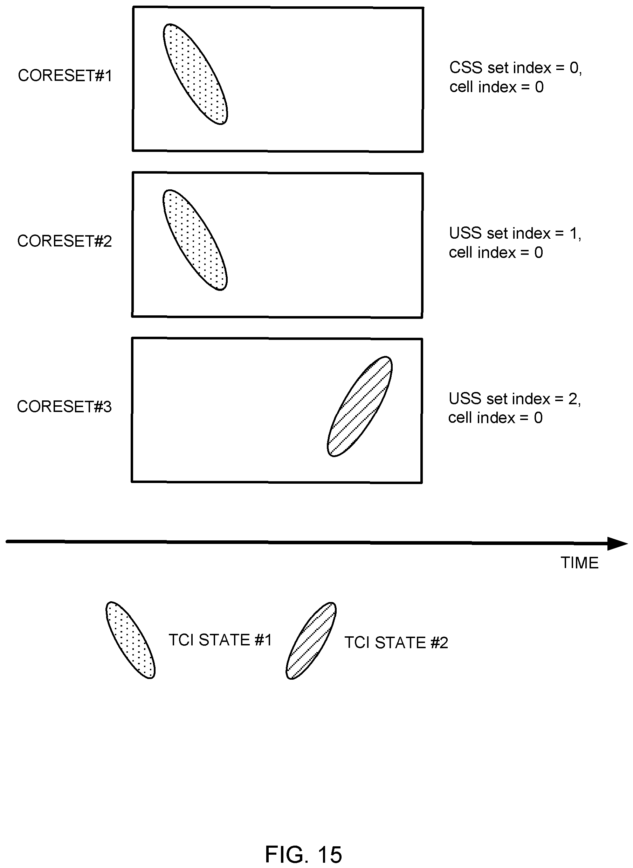

FIG. 15 is a diagram to show an example of the prioritized CORESET according to Embodiment 1.1.2.1. In the present example, three CORESETs (CORESETs #1 to #3) overlap with respect to time.

CORESET #1 corresponds to CSS set index = 0 and cell index = 0, and has one active TCI state (TCI state #1).

CORESET #2 corresponds to USS set index = 1 and cell index = 0, and has one active TCI state (TCI state #1).

CORESET #3 corresponds to USS set index = 2 and cell index = 0, and has one active TCI state (TCI state #2).

In the case of FIG. 15, first, the UE selects CORESET #1 corresponding to the CSS set as the prioritized CORESET. CORESET #1 has one active TCI state, and thus conforms to the operation of Embodiment 1.1.2. The prioritized CORESET corresponds to the first prioritized CORESET, and TCI state #1 corresponds to the 1st priority TCI state.

Next, the UE searches the second prioritized CORESET. One TCI state of CORESET #3 is different from TCI state #1 of the prioritized CORESET, and thus the UE determines TCI state #2 as the 2nd priority TCI state, and determines CORESET #3 as the second prioritized CORESET and monitors CORESET #3.

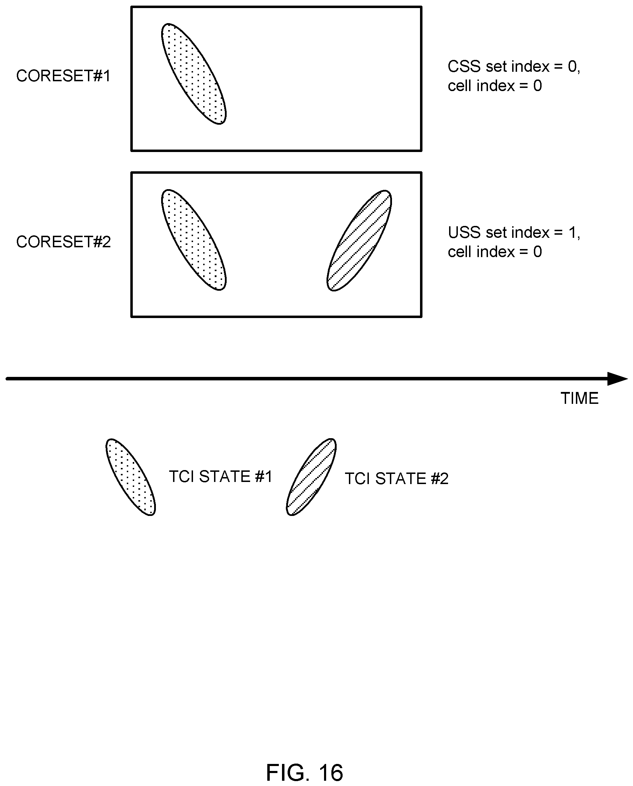

FIG. 16 is a diagram to show an example of the prioritized CORESET according to Embodiment 1.1.2.1. In the present example, two CORESETs (CORESETs #1 to #2) overlap with respect to time.

CORESET #1 corresponds to CSS set index = 0 and cell index = 0, and has one active TCI state (TCI state #1).

CORESET #2 corresponds to USS set index = 1 and cell index = 0, and has two active TCI states (TCI states #1 and #2).

In the case of FIG. 16, first, the UE selects CORESET #1 corresponding to the CSS set as the prioritized CORESET. CORESET #1 has one active TCI state, and thus conforms to the operation of Embodiment 1.1.2. The prioritized CORESET corresponds to the first prioritized CORESET, and TCI state #1 corresponds to the 1st priority TCI state.

Next, the UE searches the second prioritized CORESET. One of the two active TCI states of CORESET #2 is the same as the 1st priority TCI state, and thus the UE determines the other (TCI state #2) of the two active TCI states as the 2nd priority TCI state, and determines CORESET #2 as the second prioritized CORESET and monitors CORESET #2.

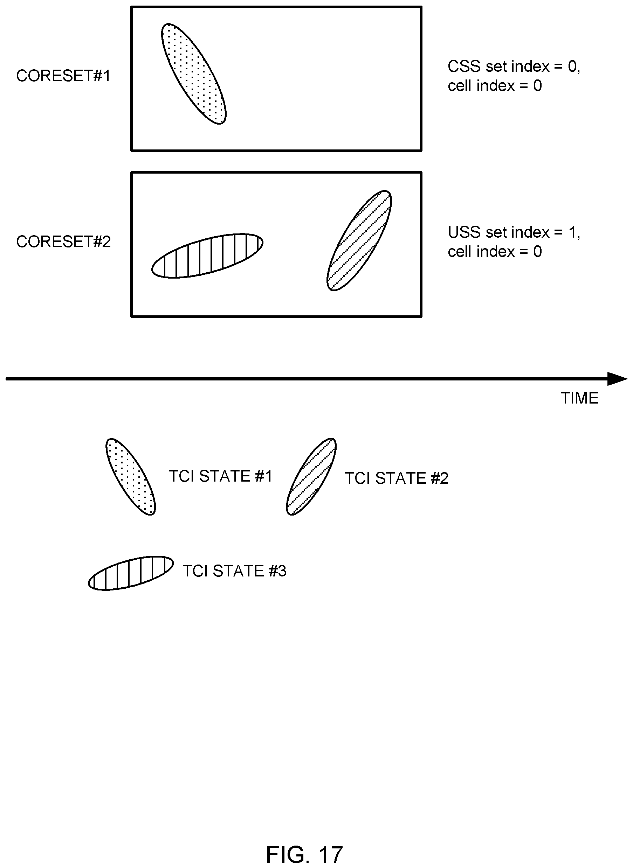

FIG. 17 is a diagram to show an example of the prioritized CORESET according to Embodiment 1.1.2.1. In the present example, two CORESETs (CORESETs #1 to #2) overlap with respect to time.

CORESET #1 corresponds to CSS set index = 0 and cell index = 0, and has one active TCI state (TCI state #1).

CORESET #2 corresponds to USS set index = 1 and cell index = 0, and has two active TCI states (TCI states #3 and #2).

In the case of FIG. 17, first, the UE selects CORESET #1 corresponding to the CSS set as the prioritized CORESET. CORESET #1 has one active TCI state, and thus conforms to the operation of Embodiment 1.1.2. The prioritized CORESET corresponds to the first prioritized CORESET, and TCI state #1 corresponds to the 1st priority TCI state.

Next, the UE searches the second prioritized CORESET. Both of the two active TCI states of CORESET #2 are different from the 1st priority TCI state, and thus the UE determines the TCI state (TCI state #3) having the maximum TCI state ID out of the two active TCI states as the 2nd priority TCI state, determines CORESET #2 as the second prioritized CORESET, and monitors the PDCCH candidate by applying only TCI state #3 in CORESET #2.

### [[Embodiment 1.1.2.2]]

Out of the remaining colliding CORESETs except for the first prioritized CORESET, first, the UE determines a subset of CORESETs having two active TCI states and having one of the TCI states the same as the 1st priority TCI state.

Then, out of the subset, the UE determines the second prioritized CORESET in accordance with the same priority rule as Rel. 16. In other words, the second prioritized CORESET may correspond to, if any, the CSS set having the minimum index in a cell having the minimum index including the CSS set out of the CORESETs included in the subset, otherwise, the second prioritized CORESET may correspond to the USS set having the minimum index in the cell having the minimum index. The minimum USS set index is determined over all of the USS sets having at least one PDCCH candidate in the overlapping PDCCH monitoring occasions.

The 2nd priority TCI state corresponds to a TCI state different from the 1st priority TCI state out of the active TCI states of the second prioritized CORESET.

In Embodiment 1.1.2.2, in the second prioritized CORESET, the PDCCH candidate (CORESET) can be monitored using both of the 1st priority TCI and 2nd priority TCI states.

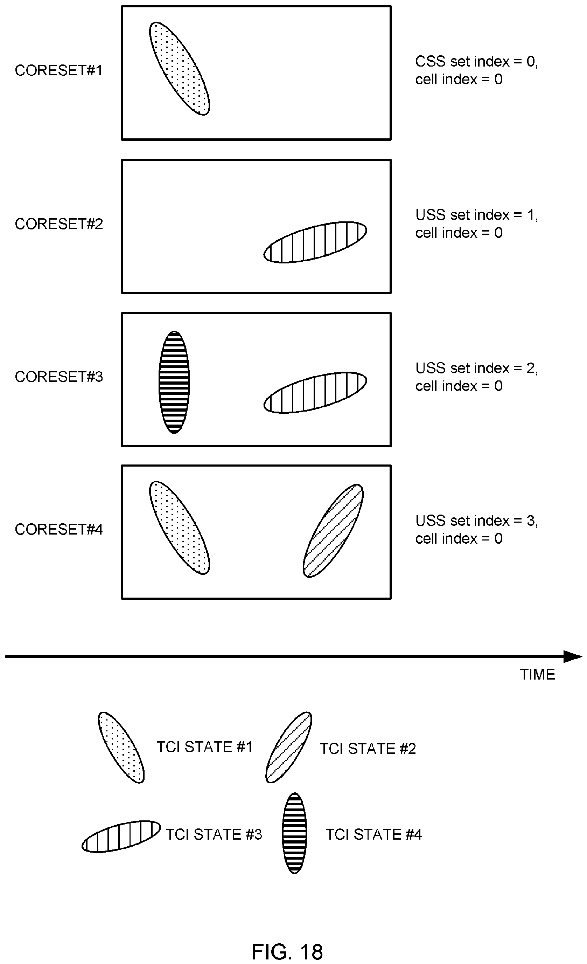

FIG. 18 is a diagram to show an example of the prioritized CORESET according to Embodiment 1.1.2.2. In the present example, four CORESETs (CORESETs #1 to #4) overlap with respect to time.

CORESET #1 corresponds to CSS set index = 0 and cell index = 0, and has one active TCI state (TCI state #1).

CORESET #2 corresponds to USS set index = 1 and cell index = 0, and has one active TCI state (TCI state #3).

CORESET #3 corresponds to USS set index = 2 and cell index = 0, and has two active TCI states (TCI states #3 and #4).

CORESET #4 corresponds to USS set index = 3 and cell index = 0, and has two active TCI states (TCI states #1 and #2).

In the case of FIG. 18, first, the UE selects CORESET #1 corresponding to the CSS set as the prioritized CORESET. CORESET #1 has one active TCI state, and thus conforms to the operation of Embodiment 1.1.2. The prioritized CORESET corresponds to the first prioritized CORESET, and TCI state #1 corresponds to the 1st priority TCI state.

Next, the UE searches the second prioritized CORESET. Of the remaining CORESETs #2 to #4, a CORESET having two active TCI states and having one of the TCI states the same as the 1st priority TCI state is only CORESET #4. Thus, the UE determines TCI state #2 different from the 1st priority TCI state out of the TCI states of CORESET #4 as the 2nd priority TCI state, determines CORESET #4 as the second prioritized CORESET, and monitors the PDCCH candidate by applying TCI states #1 and #2 in CORESET #4.

### [[CORESET Other than Prioritized CORESET]]

Monitoring of CORESETs other than the prioritized CORESET (the first prioritized CORESET and the second prioritized CORESET) according to Embodiment 1.1.2 will be described.

Regarding a CORESET having one active TCI state other than the prioritized CORESET, when the following condition (1.1.2a) or (1.1.2b) is satisfied, the UE may monitor the CORESET:
(1.1.2a) The one active TCI state is of the same QCL type D as the 1st priority TCI state.
(1.1.2b) The one active TCI state is of the same QCL type D as the 1st priority TCI state or the 2nd priority TCI state.

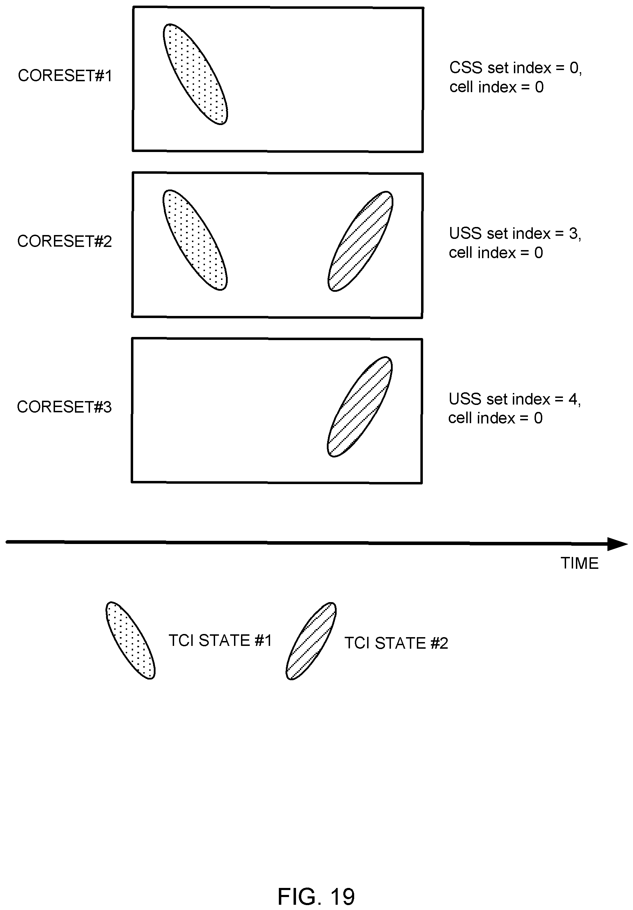

FIG. 19 is a diagram to show an example of the prioritized CORESET and other CORESETs to be simultaneously monitored according to Embodiment 1.1.2. In the present example, three CORESETs (CORESETs #1 to #3) overlap with respect to time.

CORESET #1 corresponds to CSS set index = 0 and cell index = 0, and has one active TCI state (TCI state #1).

CORESET #2 corresponds to USS set index = 3 and cell index = 0, and has two active TCI states (TCI states #1 and #2).

CORESET #3 corresponds to USS set index = 4 and cell index = 0, and has one active TCI state (TCI state #2).

In the case of FIG. 19, first, the UE selects CORESET #1 corresponding to the CSS set as the prioritized CORESET. CORESET #1 has one active TCI state, and thus conforms to the operation of Embodiment 1.1.2. The prioritized CORESET corresponds to the first prioritized CORESET, and TCI state #1 corresponds to the 1st priority TCI state.

Next, the UE searches the second prioritized CORESET. Of the remaining CORESETs #2 to #3, a CORESET having two active TCI states and having one of the TCI states the same as the 1st priority TCI state is only CORESET #2. Thus, the UE determines TCI state #2 different from the 1st priority TCI state out of the TCI states of CORESET #2 as the 2nd priority TCI state, determines CORESET #2 as the second prioritized CORESET, and monitors the PDCCH candidate by applying TCI states #1 and #2 in CORESET #2.

When the UE takes condition (1.1.2a) into consideration, the UE does not monitor CORESET #3. When the UE takes condition (1.1.2b) into consideration, the UE monitors CORESET #3.

Regarding a CORESET having two active TCI states other than the prioritized CORESET, when the following condition (1.1.2c), (1.1.2d), or (1.1.2e) is satisfied, the UE may monitor the CORESET:
(1.1.2c) The two active TCI states are of the same QCL type D as the 1st priority TCI state and the 2nd priority TCI state.
(1.1.2d) One of the two active TCI states is of the same QCL type D as the 1st priority TCI state.
(1.1.2e) One of the two active TCI states is of the same QCL type D as any one of the 1st priority TCI state and the 2nd priority TCI state.

Note that, when (1.1.2d) above is satisfied, the UE monitors the CORESET by applying only the TCI state of the same QCL type D as the 1st priority TCI state.

Note that, when (1.1.2e) above is satisfied, the UE monitors the CORESET by applying only the TCI state of the same QCL type D as any one of the 1st priority TCI state and the 2nd priority TCI state.

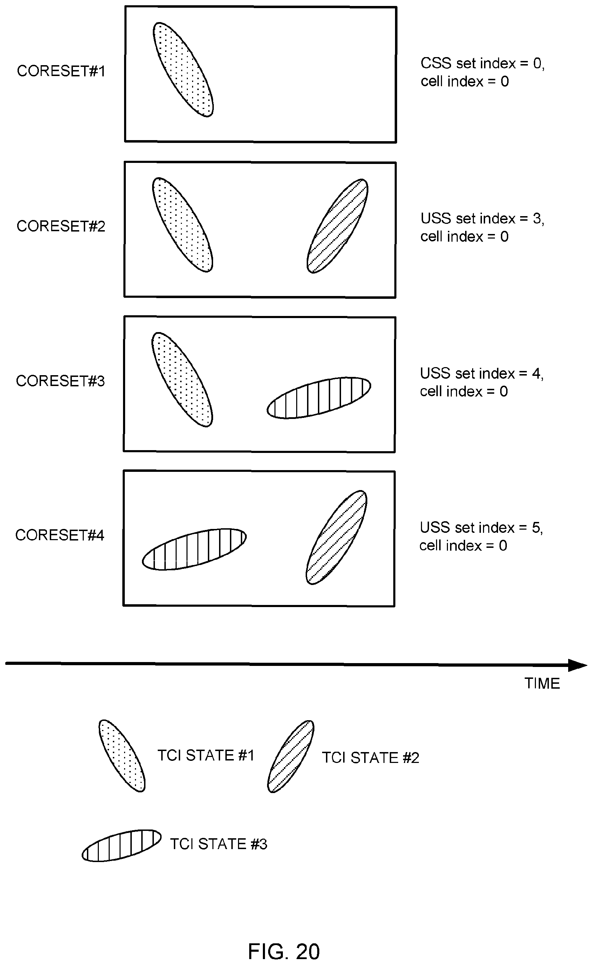

FIG. 20 is a diagram to show an example of the prioritized CORESET and other CORESETs to be simultaneously monitored according to Embodiment 1.1.2. In the present example, four CORESETs (CORESETs #1 to #4) overlap with respect to time.

CORESET #1 corresponds to CSS set index = 0 and cell index = 0, and has one active TCI state (TCI state #1).

CORESET #2 corresponds to USS set index = 3 and cell index = 0, and has two active TCI states (TCI states #1 and #2).

CORESET #3 corresponds to USS set index = 4 and cell index = 0, and has two active TCI states (TCI states #1 and #3).

CORESET #4 corresponds to USS set index = 5 and cell index = 0, and has two active TCI states (TCI states #3 and #2).

In the case of FIG. 20, first, the UE selects CORESET #1 corresponding to the CSS set as the prioritized CORESET. CORESET #1 has one active TCI state, and thus conforms to the operation of Embodiment 1.1.2. The prioritized CORESET corresponds to the first prioritized CORESET, and TCI state #1 corresponds to the 1st priority TCI state.

Next, the UE searches the second prioritized CORESET. Of the remaining CORESETs #2 to #4, CORESETs having two active TCI states and having one of the TCI states the same as the 1st priority TCI state are only CORESETs #2 and #3. The UE determines CORESET #2 having the smaller SS set index as the second prioritized CORESET. The UE determines TCI state #2 different from the 1st priority TCI state out of the TCI states of CORESET #2 as the 2nd priority TCI state, and monitors the PDCCH candidate by applying TCI states #1 and #2 in CORESET #2.

When the UE takes condition (1.1.2c) into consideration, the UE does not monitor CORESET #3. When the UE takes condition (1.1.2d) or (1.1.2e) into consideration, the UE monitors CORESET #3 by applying only TCI state #1.

When the UE takes condition (1.1.2c) or (1.1.2d) into consideration, the UE does not monitor CORESET #4. When the UE takes condition (1.1.2e) into consideration, the UE monitors CORESET #4 by applying only TCI state #2.

### [Embodiment 1.2]

The priority rule of Embodiment 1.2 is as follows:
- Step 1: If there is a subset of CORESETs having two active TCI states out of the colliding CORESETs, the priority rule of Rel. 16 NR is applied to only the subset of CORESETs. If the prioritized CORESET is detected, the step ends. Otherwise, the step proceeds to step 2.
- Step 2: If the prioritized CORESET is not detected in step 1, the priority rule of Rel. 16 NR is applied to only a subset of CORESETs having one active TCI state out of the colliding CORESETs.

In other words, in Embodiment 1.2, the UE determines the prioritized CORESET in accordance with the priority rule that the CORESET to be monitored is preferentially determined in order of the CSS set having two active TCI states > the USS set having two active TCI states > the CSS set having one active TCI state > the USS set having one active TCI state.

Note that, among the SS sets of the same type (CSS or USS) having the same number of active TCI states, the SS set having the smaller index (in other words, the SS set having the smaller cell index; the SS set having the smaller SS set index when the SS sets have the same cell index) is selected as the prioritized CORESET.

Similarly to the details described in Embodiment 1.1.1, the CORESET to be monitored may be determined out of the CORESETs other than the prioritized CORESET. In other words, regarding a CORESET having one active TCI state other than the prioritized CORESET, when the one active TCI state is of the same QCL type D as two active TCI states of the prioritized CORESET, the UE may monitor the CORESET.

Regarding a CORESET having two active TCI states other than the prioritized CORESET, when (1.1.1a) or (1.1.1b) above is satisfied, the UE may monitor the CORESET.

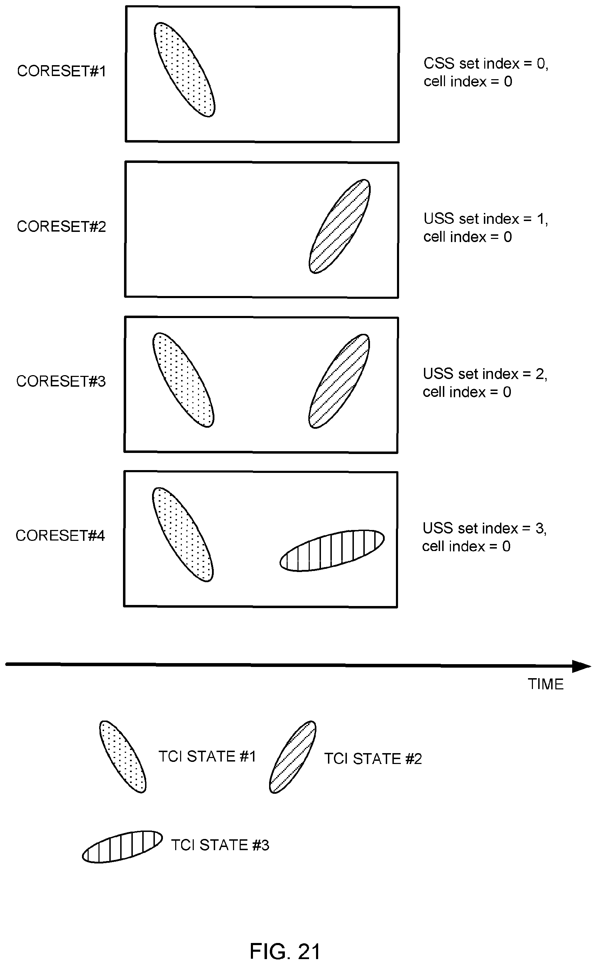

FIG. 21 is a diagram to show an example of the prioritized CORESET and other CORESETs to be simultaneously monitored according to Embodiment 1.2. In the present example, four CORESETs (CORESETs #1 to #4) overlap with respect to time.

CORESET #1 corresponds to CSS set index = 0 and cell index = 0, and has one active TCI state (TCI state #1).

CORESET #2 corresponds to USS set index = 1 and cell index = 0, and has one active TCI state (TCI state #2).

CORESET #3 corresponds to USS set index = 2 and cell index = 0, and has two active TCI states (TCI states #1 and #2).

CORESET #4 corresponds to USS set index = 3 and cell index = 0, and has two active TCI states (TCI states #1 and #3).

In the case of FIG. 21, CORESETs having two active TCI states are CORESETs #3 and #4, and CORESET #3 corresponding to the smaller SS set index is selected as the prioritized CORESET.

One TCI state of CORESET #1 is of the same QCL type D as TCI state #1 of the prioritized CORESET, and thus the UE monitors CORESET #1.

One TCI state of CORESET #2 is of the same QCL type D as TCI state #2 of the prioritized CORESET, and thus the UE monitors CORESET #2.

One of the two TCI states of CORESET #4 are of the same QCL type D as TCI state #1 of the prioritized CORESET, whereas the other is of a different QCL type D (TCI state #3) from TCI state #2 of the prioritized CORESET. Thus, the UE in accordance with (1.1.1a) above does not monitor CORESET #4. The UE in accordance with (1.1.1b) above monitors CORESET #4 by applying only TCI state #1.

### [Embodiment 1.3]

The priority rule of Embodiment 1.3 is as follows:
- Step 1: If there is a CORESET having two active TCI states and corresponding to the CSS set having the minimum index in a cell having the minimum index including the CSS set out of the colliding CORESETs, the CORESET is determined as the prioritized CORESET, and the step ends. Otherwise, the step proceeds to step 2.
- Step 2: If there is a CORESET having one active TCI state and corresponding to the CSS set having the minimum index in a cell having the minimum index including the CSS set out of the colliding CORESETs, the CORESET is determined as the prioritized CORESET, and the step ends. Otherwise, the step proceeds to step 3.

- Step 3: If there is a CORESET having two active TCI states and corresponding to the USS set having the minimum index in a cell having the minimum index including the USS set out of the colliding CORESETs, the CORESET is determined as the prioritized CORESET, and the step ends. Otherwise, the step proceeds to step 4.
- Step 4: If there is a CORESET having one active TCI state and corresponding to the USS set having the minimum index in a cell having the minimum index including the USS set out of the colliding CORESETs, the CORESET is determined as the prioritized CORESET, and the step ends.

In other words, in Embodiment 1.3, the UE determines the prioritized CORESET in accordance with the priority rule that the CORESET to be monitored is preferentially determined in order of the CSS set having two active TCI states > the CSS set having one active TCI state > the USS set having two active TCI states > the USS set having one active TCI state.

Note that, among the SS sets of the same type (CSS or USS) having the same number of active TCI states, the SS set having the smaller index (in other words, the SS set having the smaller cell index; the SS set having the smaller SS set index when the SS sets have the same cell index) is selected as the prioritized CORESET.

If the prioritized CORESET is determined in step 1 or 3 above, the UE may determine a CORESET to be further monitored out of the CORESETs other than the prioritized CORESET, based on Embodiment 1.1.1.

If the prioritized CORESET is determined in step 2 or 4 above, the UE may determine a CORESET to be further monitored out of the CORESETs other than the prioritized CORESET, based on Embodiment 1.1.2.

According to the present embodiment, when a plurality of PDCCHs (CORESETs) collide, the PDCCH to be monitored can be appropriately determined.

Note that the present embodiment is not limited to the case in which the UE is configured with (or uses) the SFN PDCCH repetition scheme, and can be applied to a case in which two or more TCI states are activated for one CORESET.

### <Seventh Embodiment>

The present embodiment relates to an FDM PDCCH repetition scheme.

In the present embodiment, two SS sets having a plurality of corresponding CORESETs may be used for PDCCH repetition. Association between the two SS sets and the plurality of CORESETs may be defined in a specification in advance, or may be configured for the UE with higher layer signaling (for example, RRC signaling).

In the present embodiment, when a plurality of PDCCHs of different QCL types D collide, the UE determines the prioritized CORESET, based on at least one of the priority rules described in Embodiments 2.1 to 2.3. Each of them will be described below.

Note that association between a given CORESET (for example, the prioritized CORESET) and another CORESET may be defined in a specification in advance, or may be configured for the UE with higher layer signaling (for example, RRC signaling). Not only are the CORESETs associated, but the CORESET and the SS set may be associated, or the SS sets may be associated.

In the present embodiment, the prioritized CORESET may be interchangeably interpreted as an "SS set corresponding to the prioritized CORESET/prioritized CORESET". In the present embodiment, another CORESET may be interchangeably interpreted as "another CORESET/an SS set corresponding to another CORESET".

The "association" in the present embodiment may be referred to as association for collision control of a plurality of PDCCHs, association for CORESET selection of PDCCH monitoring, association related to prioritization of the CORESET, and the like.

### [Embodiment 2.1]

The priority rule of Embodiment 2.1 is the same as that of Rel. 16 NR. In other words, the UE determines the prioritized CORESET in accordance with a priority rule that the CSS set is preferentially monitored over the USS set, and that, among the SS sets of the same type (CSS or USS), the SS set having the smaller index (in other words, the SS set having the smaller cell index; the SS set having the smaller SS set index when the SS sets have the same cell index) is preferentially monitored.

Embodiment 2.1 is further broadly classified into the following two:
- Embodiment 2.1.1: The prioritized CORESET is associated with another CORESET.
- Embodiment 2.1.2: The prioritized CORESET is not associated with another CORESET.

### [[Embodiment 2.1.1]]

The UE may simultaneously monitor another CORESET relating to the prioritized CORESET, together with the prioritized CORESET.

In Embodiment 2.1.1, the TCI state of the prioritized CORESET may be referred to as a 1st priority TCI state. The TCI state of the another CORESET may be referred to as a 2nd priority TCI state.

Regarding the remaining CORESETs except for the prioritized CORESET and the another CORESET, when the following condition (2.1.1a) or (2.1.1b) is satisfied, the UE may monitor the CORESETs:
(2.1.1a) The TCI state is of the same QCL type D as the 1st priority TCI state.
(2.1.1b) The TCI state is of the same QCL type D as the 1st priority TCI state or the 2nd priority TCI state.

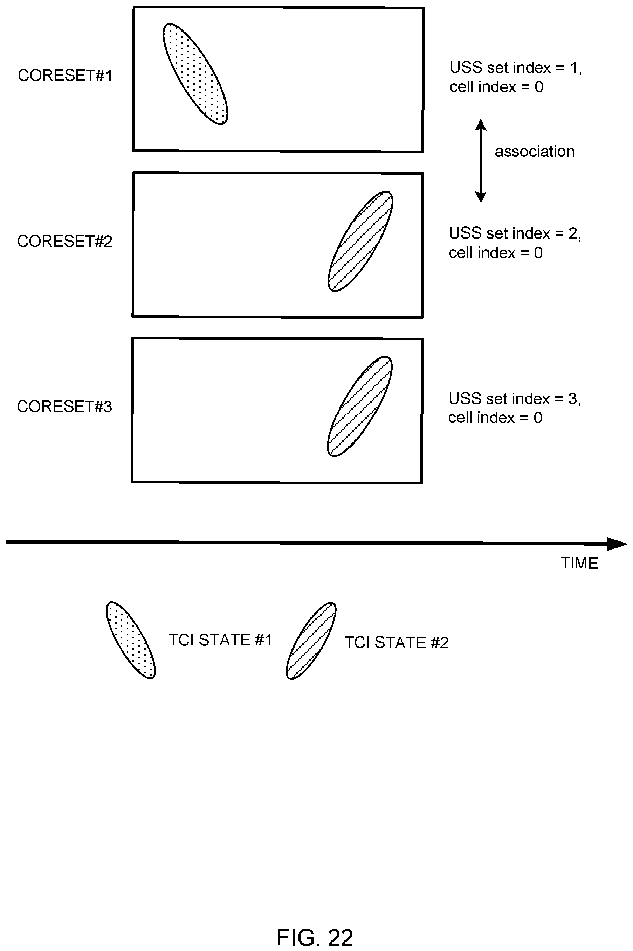

FIG. 22 is a diagram to show an example of the prioritized CORESET and other CORESETs to be simultaneously monitored according to Embodiment 2.1.1. In the present example, three CORESETs (CORESETs #1 to #3) overlap with respect to time.

CORESET #1 corresponds to USS set index = 1 and cell index = 0, and has one active TCI state (TCI state #1).

CORESET #2 corresponds to USS set index = 2 and cell index = 0, and has one active TCI state (TCI state #2).

CORESET #3 corresponds to USS set index = 3 and cell index = 0, and has one active TCI state (TCI state #2).

CORESETs #1 and #2 are associated with each other.

In the case of FIG. 22, first, the UE selects CORESET #1 corresponding to the USS set having the minimum USS set index as the prioritized CORESET. CORESET #1 has another associated CORESET (CORESET #2), and thus conforms to the operation of Embodiment 2.1.1.

CORESET #2 is associated with the prioritized CORESET, and thus the UE monitors CORESET #2. The UE determines the active TCI state of CORESET #2 as the 2nd priority TCI state.

CORESET #3 is not associated with the prioritized CORESET, but the active TCI state of CORESET #3 is of the same QCL type D as the 2nd priority TCI state. Thus, the UE in accordance with (2.1.1a) above does not monitor CORESET #3. The UE in accordance with (2.1.1b) above monitors CORESET #3.

### [[Embodiment 2.1.2]]

Regarding Embodiment 2.1.2, a prioritized CORESET first determined in accordance with the same priority rule as Rel. 16 NR is also referred to as a first prioritized CORESET, and a subsequently determined prioritized CORESET other than the first prioritized CORESET is also referred to as a second prioritized CORESET. The second prioritized CORESET may be referred to as CORESET X.

The active TCI state of the first prioritized CORESET may be referred to as a 1st priority TCI state. The active TCI state of the second prioritized CORESET may be referred to as a 2nd priority TCI state.

Embodiment 2.1.2 is broadly classified into Embodiments 2.1.2.1 and 2.1.2.2, depending upon a determination method of the second prioritized CORESET.

### [[Embodiment 2.1.2.1]]

The second prioritized CORESET may be determined in accordance with the same priority rule as Rel. 16 out of the remaining colliding CORESETs except for the first prioritized CORESET. In other words, the second prioritized CORESET may correspond to, if any, the CSS set having the minimum index in a cell having the minimum index including the CSS set out of the remaining colliding CORESETs, otherwise, the second prioritized CORESET may correspond to the USS set having the minimum index in the cell having the minimum index. The minimum USS set index is determined over all of the USS sets having at least one PDCCH candidate in the overlapping PDCCH monitoring occasions.

When the active TCI state of the candidate of the second prioritized CORESET derived in accordance with the priority rule is the same as the 1st priority TCI state, the subsequent candidate (the CORESET corresponding to the subsequent SS set/cell having the minimum index) may be searched as a candidate of the second prioritized CORESET. In other words, the UE may continue the search of the second prioritized CORESET until the active TCI state becomes different from the 1st priority TCI state.

When the CORESET having only one active TCI state different from the 1st priority TCI state is detected, in accordance with the priority rule, the UE may determine the active TCI state as the 2nd priority TCI state, and determine the CORESET as the second prioritized CORESET.

Note that, even when the active TCI state of the candidate of the second prioritized CORESET derived in accordance with the priority rule is the same as the 1st priority TCI state, the UE may determine the active TCI state as the 2nd priority TCI state, and determine the candidates as the second prioritized CORESET. In this case, the second prioritized CORESET is the same as the first prioritized CORESET, and thus it may be expressed that there is no second prioritized CORESET.

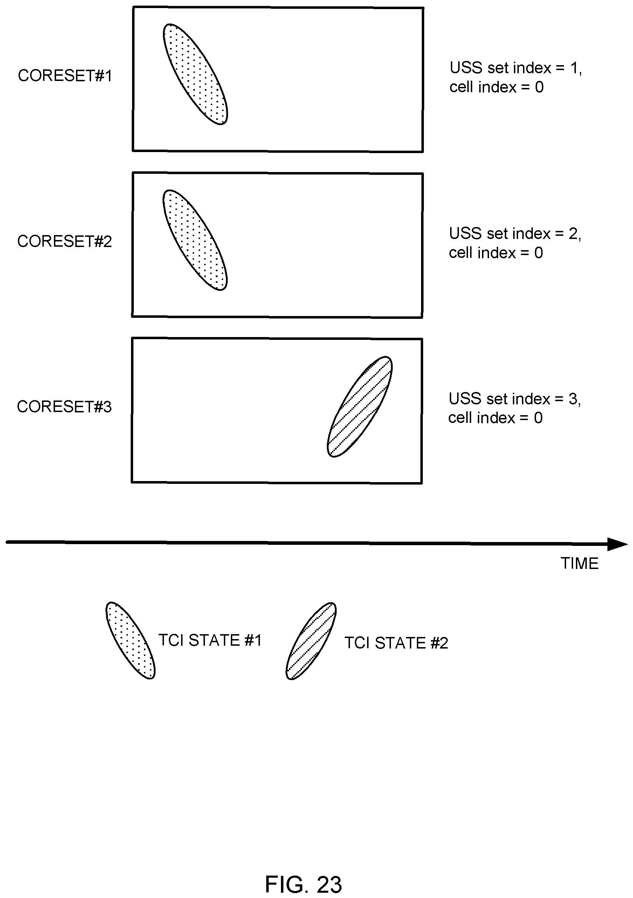

FIG. 23 is a diagram to show an example of the prioritized CORESET according to Embodiment 2.1.2.1. In the present example, three CORESETs (CORESETs #1 to #3) overlap with respect to time.

CORESET #1 corresponds to USS set index = 1 and cell index = 0, and has one active TCI state (TCI state #1).

CORESET #2 corresponds to USS set index = 2 and cell index = 0, and has one active TCI state (TCI state #1).

CORESET #3 corresponds to USS set index = 3 and cell index = 0, and has one active TCI state (TCI state #2).

In the case of FIG. 23, first, the UE selects CORESET #1 corresponding to the USS set having the minimum USS set index as the prioritized CORESET. CORESET #1 does not have another associated CORESET, and thus conforms to the operation of Embodiment 2.1.2. The prioritized CORESET corresponds to the first prioritized CORESET, and TCI state #1 corresponds to the 1st priority TCI state.

Next, the UE searches the second prioritized CORESET. The TCI state (TCI state #2) of the CORESET #3 is different from TCI state #1 of the prioritized CORESET, and thus the UE determines TCI state #2 as the 2nd priority TCI state, and determines CORESET #3 as the second prioritized CORESET and monitors CORESET #3.

### [[Embodiment 2.1.2.2]]

Out of the remaining colliding CORESETs except for the first prioritized CORESET, first, the UE determines a subset of CORESETs being associated with another CORESET and having the TCI state the same as the 1st priority TCI state.

Then, out of the subset, the UE may determine the second prioritized CORESET in accordance with the same priority rule as Rel. 16. In other words, the second prioritized CORESET may correspond to, if any, the CSS set having the minimum index in a cell having the minimum index including the CSS set out of the CORESETs included in the subset, otherwise, the second prioritized CORESET may correspond to the USS set having the minimum index in the cell having the minimum index. The minimum USS set index is determined over all of the USS sets having at least one PDCCH candidate in the overlapping PDCCH monitoring occasions.

The 2nd priority TCI state may correspond to the active TCI state of another CORESET associated with the second prioritized CORESET.

Note that the second prioritized CORESET may be, if any, a CORESET associated with the CORESET corresponding to the CSS set having the minimum index in a cell having the minimum index including the CSS set out of the CORESETs included in the subset, otherwise, the second prioritized CORESET may be a CORESET associated with the CORESET corresponding to the USS set having the minimum index in the cell having the minimum index. In this case, the 2nd priority TCI state may correspond to the active TCI state of the second prioritized CORESET.

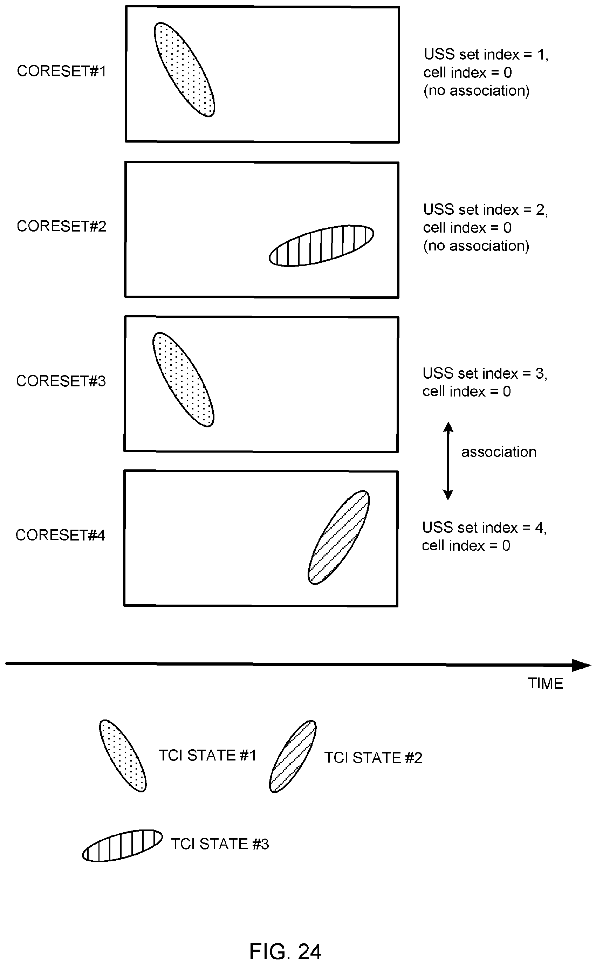

FIG. 24 is a diagram to show an example of the prioritized CORESET according to Embodiment 2.1.2.2. In the present example, four CORESETs (CORESETs #1 to #4) overlap with respect to time.

CORESET #1 corresponds to USS set index = 1 and cell index = 0, and has one active TCI state (TCI state #1).

CORESET #2 corresponds to USS set index = 2 and cell index = 0, and has one active TCI state (TCI state #3).

CORESET #3 corresponds to USS set index = 3 and cell index = 0, and has one active TCI state (TCI state #1).

CORESET #4 corresponds to USS set index = 4 and cell index = 0, and has one active TCI state (TCI state #2).

CORESET #1 is not associated with other CORESETs. CORESET #2 is not associated with other CORESETs. CORESETs #3 and #4 are associated with each other.

In the case of FIG. 24, first, the UE selects CORESET #1 corresponding to the USS set having the minimum USS set index as the prioritized CORESET. CORESET #1 does not have another associated CORESET, and thus conforms to the operation of Embodiment 2.1.2. The prioritized CORESET corresponds to the first prioritized CORESET, and TCI state #1 corresponds to the 1st priority TCI state.

Next, the UE searches the second prioritized CORESET. Of the remaining CORESETs #2 to #4, a CORESET having another associated CORESET and having the TCI state the same as the 1st priority TCI state is only CORESET #3. Thus, the UE determines CORESET #3 as the second prioritized CORESET, and determines TCI state #2 of CORESET #4 associated with CORESET #3 as the 2nd priority TCI state. The UE monitors the PDCCH candidates in CORESETs #3 and #4.

### [[CORESET Other than Prioritized CORESET]]

Monitoring of CORESETs other than the prioritized CORESET (the first prioritized CORESET and the second prioritized CORESET) and CORESETs associated with the prioritized CORESET according to Embodiment 2.1.2 will be described.

Regarding these CORESETs, the UE may monitor the CORESETs when the following condition (2.1.2a) or (2.1.2b) is satisfied.

(2.1.2a) The TCI state is of the same QCL type D as the 1st priority TCI state.

(2.1.2b) The TCI state is of the same QCL type D as the 1st priority TCI state or the 2nd priority TCI state.

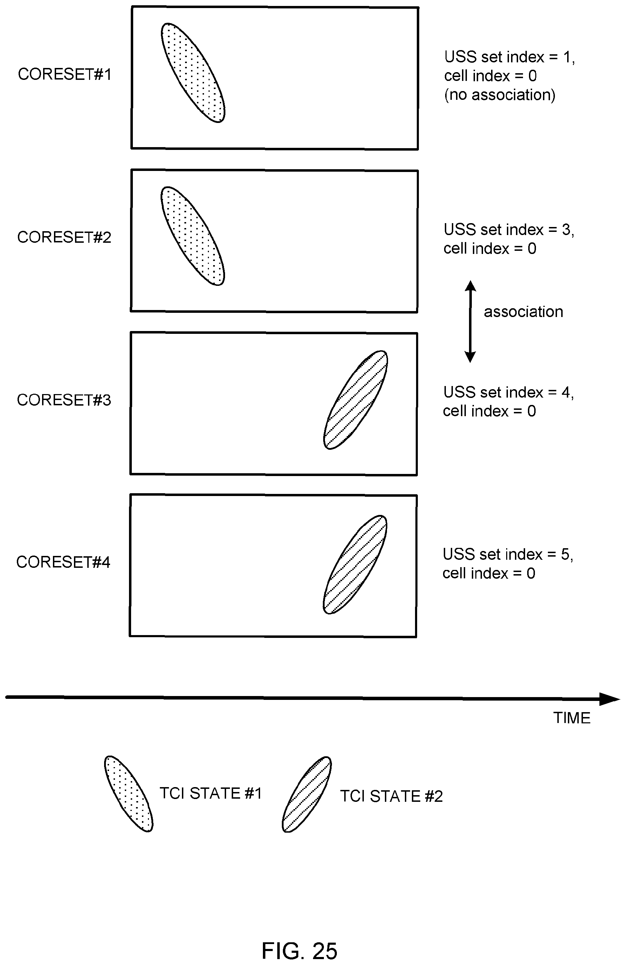

FIG. 25 is a diagram to show an example of the prioritized CORESET and other CORESETs to be simultaneously monitored according to Embodiment 2.1.2. In the present example, four CORESETs (CORESETs #1 to #4) overlap with respect to time.

CORESET #1 corresponds to USS set index = 1 and cell index = 0, and has one active TCI state (TCI state #1).

CORESET #2 corresponds to USS set index = 3 and cell index = 0, and has one active TCI state (TCI state #1).

CORESET #3 corresponds to USS set index = 4 and cell index = 0, and has one active TCI state (TCI state #2).

CORESET #4 corresponds to USS set index = 5 and cell index = 0, and has one active TCI state (TCI state #2).

CORESET #1 is not associated with other CORESETs. CORESETs #2 and #3 are associated with each other.

In the case of FIG. 25, first, the UE selects CORESET #1 corresponding to the USS set having the minimum USS set index as the prioritized CORESET. CORESET #1 does not have another associated CORESET, and thus conforms to the operation of Embodiment 2.1.2. The prioritized CORESET corresponds to the first prioritized CORESET, and TCI state #1 corresponds to the 1st priority TCI state.

Next, the UE searches the second prioritized CORESET. Of the remaining CORESETs #2 to #4, a CORESET having another associated CORESET and having the TCI state the same as the 1st priority TCI state is only CORESET #2. Thus, the UE determines CORESET #2 as the second prioritized CORESET, and determines TCI state #2 of CORESET #3 associated with CORESET #2 as the 2nd priority TCI state. The UE monitors the PDCCH candidates in CORESETs #2 and #3.

When the UE takes condition (2.1.2a) into consideration, the UE does not monitor CORESET #4. When the UE takes condition (2.1.2b) into consideration, the UE monitors CORESET #4.

### [Embodiment 2.2]

The priority rule of Embodiment 2.2 is as follows:
- Step 1: If there is a subset of CORESETs associated with another CORESET (in other words, having association with another CORESET) out of the colliding CORESETs, the priority rule of Rel. 16 NR is applied to only the subset of CORESETs. If the prioritized CORESET is detected, the step ends. Otherwise, the step proceeds to step 2.
- Step 2: If the prioritized CORESET is not detected in step 1, the priority rule of Rel. 16 NR is applied to only a subset of CORESETs not having association with another CORESET out of the colliding CORESETs.

In other words, in Embodiment 2.2, the UE determines the prioritized CORESET in accordance with the priority rule that the CORESET to be monitored is preferentially determined in order of the CSS set having association with another CORESET (which may be hereinafter also simply referred to as "association" in the present disclosure) > the USS set having association > the CSS set not having association > the USS set not having association.

Note that, among the SS sets of the same type (CSS or USS) having association (or not having association), the SS set having the smaller index (in other words, the SS set having the smaller cell index; the SS set having the smaller SS set index when the SS sets have the same cell index) is selected as the prioritized CORESET.

Similarly to the details described in Embodiment 2.1.1, the CORESET to be monitored may be determined out of the CORESETs other than the prioritized CORESET. In other words, regarding the remaining CORESETs except for the prioritized CORESET and another CORESET associated with the prioritized CORESET, when (2.1.1a) or (2.1.1b) above is satisfied, the UE may monitor the CORESETs.

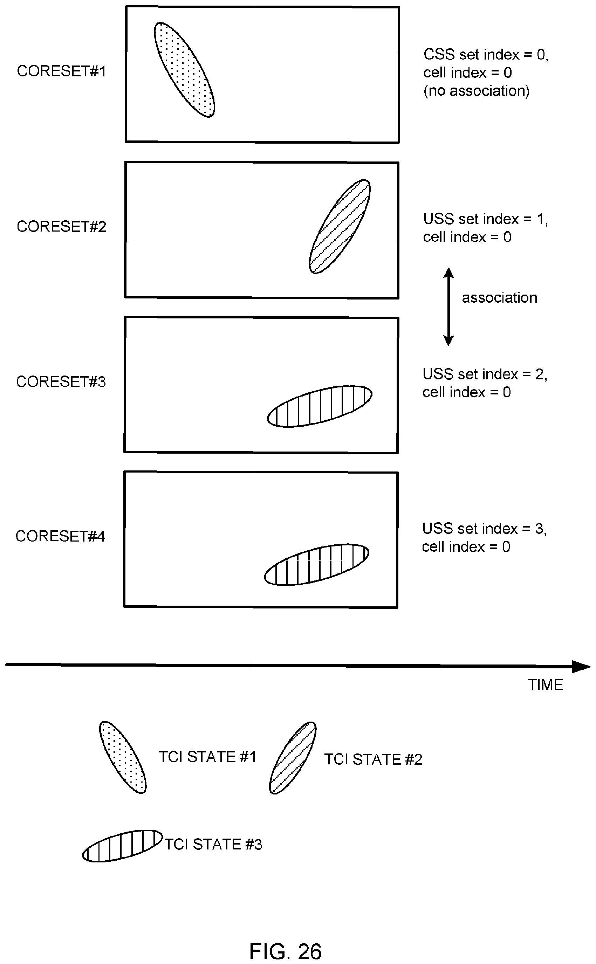

FIG. 26 is a diagram to show an example of the prioritized CORESET and other CORESETs to be simultaneously monitored according to Embodiment 2.2. In the present example, four CORESETs (CORESETs #1 to #4) overlap with respect to time.

CORESET #1 corresponds to CSS set index = 0 and cell index = 0, and has one active TCI state (TCI state #1).

CORESET #2 corresponds to USS set index = 1 and cell index = 0, and has one active TCI state (TCI state #2).

CORESET #3 corresponds to USS set index = 2 and cell index = 0, and has one active TCI state (TCI state #3).

CORESET #4 corresponds to USS set index = 3 and cell index = 0, and has one active TCI state (TCI state #3).

CORESET #1 is not associated with other CORESETs. CORESETs #2 and #3 are associated with each other.

In the case of FIG. 26, CORESETs associated with another CORESET are CORESETs #2 and #3, and CORESET #2 corresponding to the smaller SS set index is selected as the prioritized CORESET. TCI state #2 of CORESET #2 corresponds to the 1st priority TCI state.

TCI state #3 of CORESET #3 associated with the prioritized CORESET is determined as the 2nd priority TCI state. The UE monitors the PDCCH candidates in CORESETs #2 and #3.

The TCI state of CORESET #1 is neither the 1st priority TCI state nor the second priority TCI state, and thus the UE does not monitor CORESET #1. The UE in accordance with (2.1.1a) above does not monitor CORESET #4. The UE in accordance with (2.1.1b) above monitors CORESET #4.

### [Embodiment 2.3]

The priority rule of Embodiment 2.3 is as follows:
- Step 1: If there is a CORESET having association and corresponding to the CSS set having the minimum index in a cell having the minimum index including the CSS set out of the colliding CORESETs, the CORESET is determined as the prioritized CORESET, and the step ends. Otherwise, the step proceeds to step 2.
- Step 2: If there is a CORESET not having association and corresponding to the CSS set having the minimum index in a cell having the minimum index including the CSS set out of the colliding CORESETs, the CORESET is determined as the prioritized CORESET, and the step ends. Otherwise, the step proceeds to step 3.

- Step 3: If there is a CORESET having association and corresponding to the USS set having the minimum index in a cell having the minimum index including the USS set out of the colliding CORESETs, the CORESET is determined as the prioritized CORESET, and the step ends. Otherwise, the step proceeds to step 4.
- Step 4: If there is a CORESET not having association and corresponding to the USS set having the minimum index in a cell having the minimum index including the USS set out of the colliding CORESETs, the CORESET is determined as the prioritized CORESET, and the step ends.

In other words, in Embodiment 2.3, the UE determines the prioritized CORESET in accordance with the priority rule that the CORESET to be monitored is preferentially determined in order of the CSS set having association > the CSS set not having association > the USS set having association > the USS set not having association.

Note that, among the SS sets of the same type (CSS or USS) having association (or not having association), the SS set having the smaller index (in other words, the SS set having the smaller cell index; the SS set having the smaller SS set index when the SS sets have the same cell index) is selected as the prioritized CORESET.

If the prioritized CORESET is determined in step 1 or 3 above, the UE may determine a CORESET to be further monitored out of the CORESETs other than the prioritized CORESET, based on Embodiment 2.1.1.

If the prioritized CORESET is determined in step 2 or 4 above, the UE may determine a CORESET to be further monitored out of the CORESETs other than the prioritized CORESET, based on Embodiment 2.1.2.

According to the present embodiment, when a plurality of PDCCHs (CORESETs) collide, the PDCCH to be monitored can be appropriately determined.

The present embodiment is not limited to the case in which the UE is configured with (or uses) the FDM PDCCH repetition scheme, and can be applied to a case in which two SS sets having a plurality of corresponding CORESETs are used for the PDCCH.

### <Eighth Embodiment>

For two linked PDCCH candidates for the PDCCH repetition, when the UE need not be required to monitor the PDCCH candidates based on a rule (at least one of cases 1 to 7), the UE conforms to at least one of the following monitoring procedures 1 and 2.

### <<Monitoring Procedure 1>>

If the UE is not required to monitor one of the two linked PDCCH candidates based on criteria/rules, the UE is not required to monitor both of the two linked PDCCH candidates.

### <<Monitoring Procedure 2>>

Whether the UE is required to monitor each PDCCH candidate is independently determined. The determination method may be based on the existing procedure.

Based on monitoring procedure 2, if the UE is required to monitor only one of the two linked PDCCH candidates based on criteria/rules, and decoding assumption (decoding assumption 1/3/4 to be described later) using soft-combining is enabled, the UE is not required to perform soft-combining of the two linked PDCCH candidates.

A case in which the decoding assumption using soft-combining is enabled may mean at least one of a case in which the UE reports a corresponding capability and a case in which a corresponding decoding assumption is enabled/configured with higher layer signaling (RRC IE/MAC CE).

Soft-combining may be, based on reception/buffering/demodulation/decoding of a plurality of PDCCHs carrying the same DCI payload, demodulation/decoding of the DCI payload.

Linkage between two PDCCH candidates/two SS sets/two CORESETs may be configured with higher layer signaling (RRC IE/MAC CE), or may be defined in a specification (rule). For example, two linked PDCCH candidates are determined based on the same PDCCH candidate index of the same aggregation in two SS sets .

The decoding assumption may be at least one of the following decoding assumptions 1 to 4.
[Decoding Assumption 1] The UE decodes only combined PDCCH candidates without decoding individual PDCCH candidates.
[Decoding Assumption 2] The UE decodes individual PDCCH candidates.
[Decoding Assumption 3] The UE decodes the first PDCCH candidate, and decodes combined PDCCH candidates.
[Decoding Assumption 4] The UE individually decodes each PDCCH candidate, and decodes combined PDCCH candidates.

### <<Monitoring Procedures for Decoding Assumptions>>

Whether different monitoring procedures (monitoring procedures 1 and 2) can be applied to different decoding assumptions (at least two of decoding assumptions 1 to 4) may conform to any one of the following options 1 and 2.

### [Option 1]

The same monitoring procedure (monitoring procedure 1 or 2) is applied to all of the decoding assumptions (at least two of decoding assumptions 1 to 4) .

### [Option 2]

Depending upon which decoding assumption (at least one of decoding assumptions 1 to 4) is enabled, different monitoring procedures (monitoring procedure 1 or 2) are applied.

A case in which the decoding assumption (at least one of decoding assumptions 1 to 4) is enabled may mean at least one of a case in which the UE reports a corresponding capability, a case in which a corresponding decoding assumption is enabled/configured with higher layer signaling (RRC IE/MAC CE), and a case in which the decoding assumption is defined in a specification.

Option 2 may conform to any one of the following examples 1 and 2.

### [[Example 1]]

Monitoring procedure 1 is applied to decoding assumption 1/3/4. This is because, if soft-combining is required in the decoding assumption, transmission of both of the two PDCCH candidates or no transmission of both of the two PDCCH candidates is reasonable.

Monitoring procedure 2 is applied to decoding assumption 2. This is because the UE independently decodes each PDCCH candidate using selective decoding.

### [[Example 2]]

Monitoring procedure 1 is applied to decoding assumption 1. This is because the UE decodes only combined PDCCH candidates using above decoding assumption 1 and thus transmission of both of the two PDCCH candidates or no transmission of both of the two PDCCH candidates is reasonable.

Monitoring procedure 2 is applied to decoding assumption 2/3/4. This is because independent decoding of one of two PDCCH candidates is permitted.

### <<Monitoring Procedures for Cases>>

Whether different monitoring procedures (monitoring procedures 1 and 2) can be applied to different cases (at least two of cases 1 to 7) may conform to any one of the following options 1 and 2.

### [Option 1]

The same monitoring procedure (monitoring procedure 1 or 2) is applied to all of the cases (at least two of cases 1 to 7). The monitoring procedure may be determined also based on the decoding assumption (at least one of decoding assumptions 1 to 4).

### [Option 2]

Depending upon whether each decoding assumption (at least one of decoding assumptions 1 to 4) is enabled, different monitoring procedures (monitoring procedure 1 or 2) are applied. For example, monitoring procedure 2 may be applied to at least one of cases 1 to 5, and monitoring procedure 1 may be applied to at least one of cases 6 to 7.

According to the present embodiment, for the PDCCH repetition, whether or not the UE is required to monitor each PDCCH candidate is made clear.

### <Ninth Embodiment>

A higher layer parameter (RRC IE)/UE capability corresponding to at least one function (characteristic, feature) in the plurality of embodiments described above may be defined. The UE capability may indicate support of the function.

The UE configured with the higher layer parameter corresponding to the function (for enabling the function) may perform the function. "The UE not configured with the higher layer parameter corresponding to the function does not perform the function (for example, in accordance with Rel. 15/16)" may be defined.

The UE that has reported the UE capability indicating support of the function may perform the function. "The UE that does not report the UE capability indicating support of the function does not perform the function (for example, in accordance with Rel. 15/16)" may be defined.

When the UE reports the UE capability indicating support of the function, and is configured with the higher layer parameter corresponding to the function, the UE may perform the function. "When the UE does not report the UE capability indicating the support of the function, or is not configured with the higher layer parameter corresponding to the function, the UE does not perform the function (for example, in accordance with Rel. 15/16)" may be defined.

The UE capability may indicate whether or not the UE supports the PDCCH repetition.

The UE capability may indicate whether or not the UE supports the PDCCH repetition of the single TRP/multi TRP.

The UE capability may indicate whether or not the UE supports soft-combining for the PDCCH repetition.

The UE capability may indicate whether or not the UE supports at least one of decoding assumptions 1 to 4.

When the UE counts to the maximum number of PDCCH candidates, the UE capability may indicate the number (for example, 1/2/3/4) of decoding counted for two PDCCH repetitions using soft-combining.

When both of two linked SS sets/PDCCH candidates cannot be allocated in a case of PDCCH allocation at the SS set level, the UE capability may indicate whether or not to support a fallback to the existing procedure (third embodiment/aspect 3-1).

When both of two linked SS sets/PDCCH candidates cannot be allocated in a case of PDCCH allocation at the SS set level, the UE capability may indicate whether or not to support allocation of one of the linked SS sets/PDCCH candidates (third embodiment/aspect 3-2).

The UE capability may indicate whether or not to support PDCCH candidate allocation at the PDCCH candidate level (fourth embodiment).

When both of two linked SS sets/PDCCH candidates cannot be allocated in a case of PDCCH allocation at the PDCCH candidate level, the UE capability may indicate whether or not to support allocation of one of the linked SS sets/PDCCH candidates (fourth embodiment/choice 2).

The UE capability may indicate at least one of the following:
- Whether or not to support the SFN PDCCH repetition scheme.
- Whether or not to support the FDM PDCCH repetition scheme.
- Whether or not to support the SFN PDCCH repetition scheme for the CSS set.
- Whether or not to support the FDM PDCCH repetition scheme for the CSS set.
- Whether or not to support simultaneous reception of two or more PDCCHs of different QCL types D.

When the following pieces of information are configured/indicated/enabled with higher layer signaling (RRC IE/MAC CE), the UE may apply the function.
- PDCCH repetition
- PDCCH repetition of single TRP/multi TRP
- PDCCH repetition using soft-combining
- PDCCH repetition using at least of decoding assumptions 1 to 4
- SFN/FDM PDCCH repetition scheme
- Parameters for a specific release (for example, Rel. 17)

According to the present embodiment, the UE can implement the functions described above while maintaining compatibility with existing specifications.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

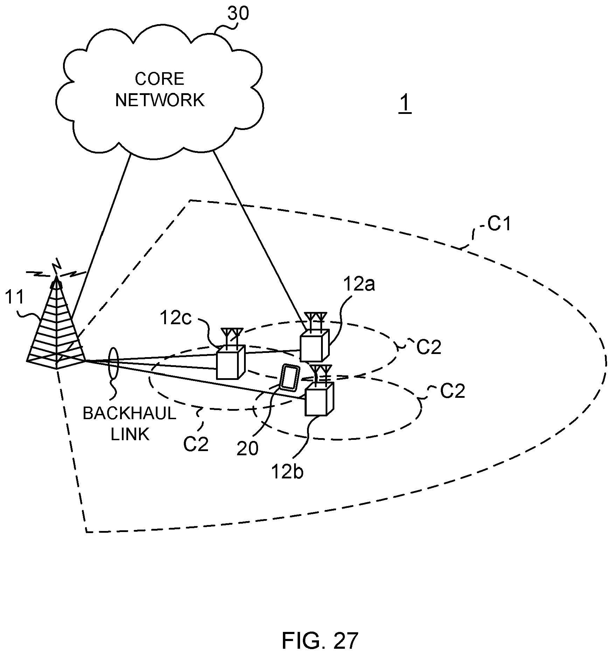

FIG. 27 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

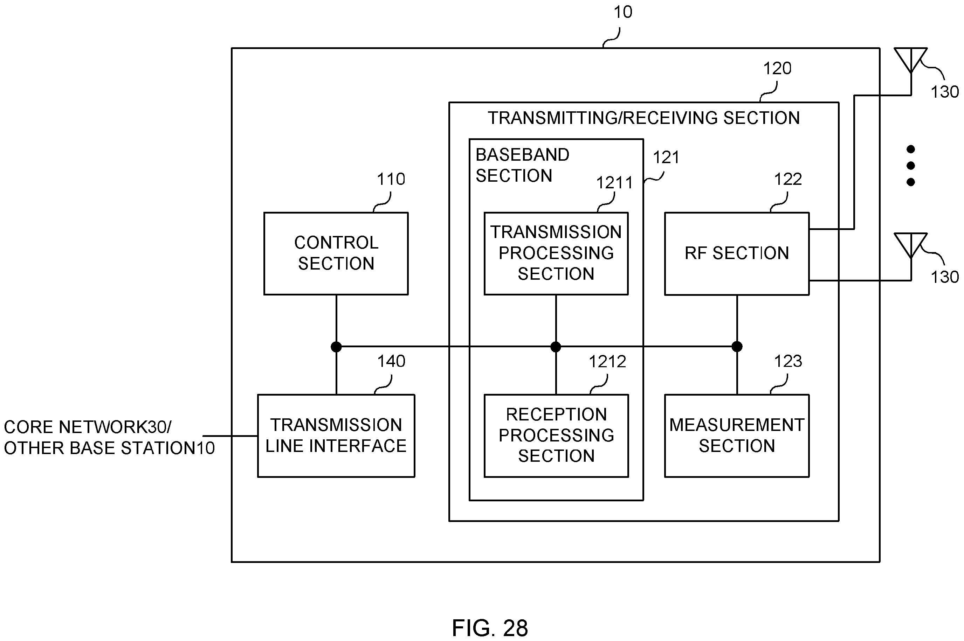

FIG. 28 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit a configuration for two physical downlink control channel (PDCCH) candidates linked to each other. When the terminal (user terminal 20) is not required to monitor one of the two PDCCH candidates, the control section 110 may determine whether or not the terminal is required to monitor at least one of the two PDCCH candidates.

### (User Terminal)

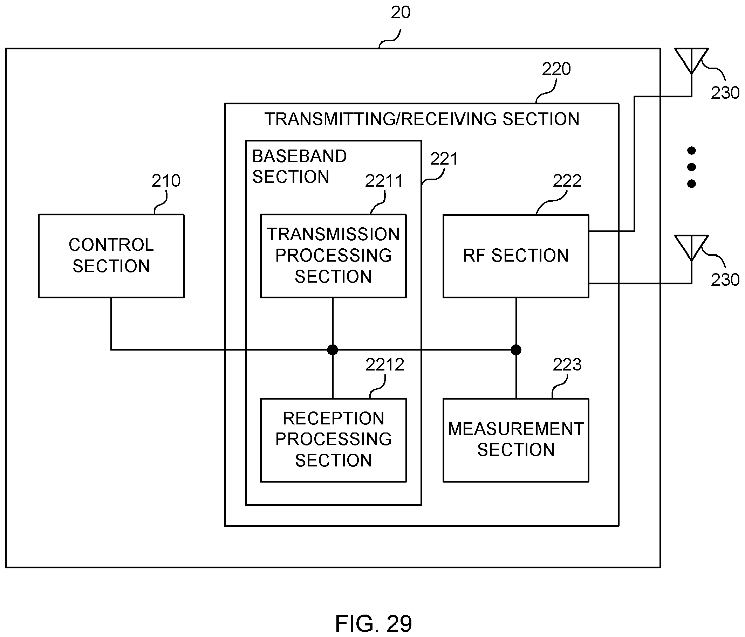

FIG. 29 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration for two physical downlink control channel (PDCCH) candidates linked to each other. When the terminal (user terminal 20) is not required to monitor one of the two PDCCH candidates, the control section 210 may determine whether or not monitoring of at least one of the two PDCCH candidates is required.

When the terminal is not required to monitor one of the two PDCCH candidates, the control section 210 may consider that monitoring of both of the two PDCCH candidates is not required (monitoring procedure 1).

When the terminal is not required to monitor one of the two PDCCH candidates, the control section 210 may determine whether or not monitoring of each of the two PDCCH candidates is required (monitoring procedure 2).

The two PDCCH candidates may be used for PDCCH repetition.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

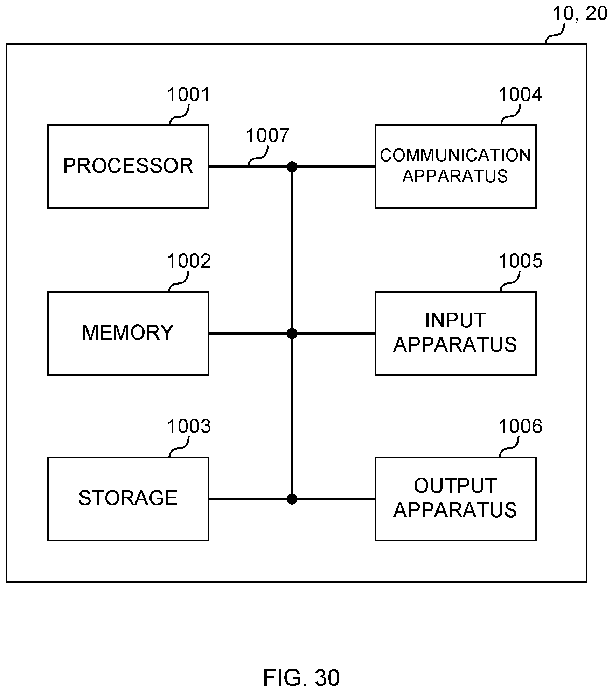

For example, a base station, a user terminal, and so on according to one embodiment of the present disclosure may function as a computer that executes the processes of the radio communication method of the present disclosure. FIG. 30 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Bluray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the hereincontained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs) .

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

The present application is based on Japanese Patent Application No. 2021-013244 filed on January 29, 2021, the entire contents of which are incorporated herein by reference.

## Claims

1. A terminal comprising:
a receiving section that receives a configuration for two physical downlink control channel (PDCCH) candidates linked to each other; and
a control section that, when the terminal is not required to monitor one of the two PDCCH candidates, determines whether or not monitoring of at least one of the two PDCCH candidates is required.

2. The terminal according to claim 1, wherein
when the terminal is not required to monitor one of the two PDCCH candidates, the control section considers that monitoring of both of the two PDCCH candidates is not required.

3. The terminal according to claim 1, wherein
when the terminal is not required to monitor one of the two PDCCH candidates, the control section determines whether or not monitoring of each of the two PDCCH candidates is required.

4. The terminal according to any one of claims 1 to 3, wherein
the two PDCCH candidates are used for PDCCH repetition.

5. A radio communication method for a terminal, the radio communication method comprising:
receiving a configuration for two physical downlink control channel (PDCCH) candidates linked to each other; and
when the terminal is not required to monitor one of the two PDCCH candidates, determining whether or not monitoring of at least one of the two PDCCH candidates is required.

6. A base station comprising:
a transmitting section that transmits a configuration for two physical downlink control channel (PDCCH) candidates linked to each other; and
a control section that, when a terminal is not required to monitor one of the two PDCCH candidates, determines whether or not the terminal is required to monitor at least one of the two PDCCH candidates.
